# EUROPEAN PATENT SPECIFICATION

(11) **EP 4 642 261 B1**
(45) Date of publication and mention of the grant of the patent: **02.12.2026**
(21) Application number: 23833598.8
(22) Date of filing: 20.12.2023
(51) Int. Cl.: A24F 40/20, A24F 40/60, A24F 40/70, A24F 40/465

(54) **LIGHT GUIDE ASSEMBLY FOR A LIGHTING SYSTEM OF AN AEROSOL-GENERATING SYSTEM AND METHOD OF MANUFACTURE THEREOF**
LICHTLEITERANORDNUNG FÜR EIN BELEUCHTUNGSSYSTEM EINES AEROSOLERZEUGUNGSSYSTEMS UND VERFAHREN ZUR HERSTELLUNG DAVON
ENSEMBLE GUIDE DE LUMIÈRE POUR UN SYSTÈME D'ÉCLAIRAGE D'UN SYSTÈME DE GÉNÉRATION D'AÉROSOL ET SON PROCÉDÉ DE FABRICATION

(30) Priority: 28.12.2022 WO PCT/CN2022/142672
(43) Date of publication of application: 05.11.2025
(73) Proprietor: Philip Morris Products S.A., 2000 Neuchâtel (CH)
(72) Inventor: AW, Sze Chiek, Singapore 569873 (SG); CHAN, Teck Yan, Singapore 569873 (SG); CHEN, Chunzun, Xiamen, Fujian 361027 (CN); CHEN, Xiaojie, Xiamen, Fujian 361027 (CN); CHEN, Zhiwei, Xiamen, Fujian 361027 (CN); EOW, Yeong Taur, Singapore 139955 (SG); FRINGELI, Jean-Luc, Singapore 139955 (SG); LI, Jiafeng, Xiamen, Fujian 361027 (CN); LIM, Seng Eng, Singapore 139955 (SG); NG, Chuah Fatt, Singapore 569873 (SG); SOH, Su Min, Singapore 139955 (SG); WU, Kim Poh, Singapore 569873 (SG); XING, Kongfu, Xiamen, Fujian 361027 (CN); ZENG, Tenghuo, Xiamen, Fujian 361027 (CN)
(74) Representative: Reddie & Grose LLP
(86) International application number: PCT/CN2023/140141
(87) International publication number: WO 2024/140360

(56) References cited:
- US-A1- 2018 020 731
- US-A1- 2019 371 974
- US-A1- 2022 287 375

## Description

The present disclosure relates to a light guide assembly for a lighting system of an aerosol-generating system and a method of manufacturing such a light guide assembly. The present disclosure also relates to a lighting system for an aerosol-generating system. The present disclosure also relates to an aerosol-generating device incorporating a lighting system.

Aerosol-generating systems are known for use in generating an inhalable aerosol for a user. The use of light emitting elements as part of an aerosol-generating system to provide a user with visual cues as to a status of an aerosol-generating system is also known.

US 2018/020731 A1 discloses embodiments of electronic cigarettes including a power supply portion. In various embodiments, the power supply portion includes a subassembly housing substantially containing a battery, an airflow sensor, and controller circuitry. Aspects of the disclosure are further directed to an eCig power supply portion further including a hemicylindrical port and/or electrical contacts aligned along a longitudinal axis of the power supply portion.

US 2022/287375 A1 discloses an aerosol-generating system comprising an aerosol-generating element; a housing including an upper surface, a lower surface, and a plurality of regions; an interface element including a plurality of contact sensing elements, each contact sensing element being configured to generate an input signal responsive to that contact sensing element detecting contact with the upper surface at or near one of the plurality of regions; and a circuit configured to receive the input signals from the plurality of contact sensing elements.

It is desirable to provide an improved lighting system for an aerosol-generating system. It is also desirable to provide an improved light guide assembly for use in a lighting system for an aerosol-generating system.

In order to meet the above objective, the present invention defines an assembly, a system and a method as defined in the present claims 1, 10 and 15.

In accordance with a first embodiment of the present disclosure, there is provided a light guide assembly for a lighting system of an aerosol-generating system. The light guide assembly may comprise a support structure and an opaque coating or film. The support structure may comprise a light transmissive body. The light transmissive body may be configured to channel light there through towards a surface of the light transmissive body. The opaque coating or film may overlie the surface of the light transmissive body. The opaque coating or film may comprise a plurality of apertures for transmission there through of light channelled through the light transmissive body.

The light transmissive body may be formed as a single piece. Alternatively, the light transmissive body may be formed of two or more structurally distinct component portions.

The provision of an opaque coating or film in which apertures are formed provides an alternative to the use of a substantially rigid structural opaque shield in which apertures are drilled through the thickness of the shield. The opaque coating or film thereby facilitates providing a light guide structure which is more compact and lightweight.

The opaque coating or film may comprise or consist of a layer of paint.

The opaque coating or film may comprise or consist of a polymer film.

The opaque coating or film may be black in colour. However, other colours may be used according to the preference of a designer or user of the light guide assembly, subject to the coating or film being substantially impervious to the transmission of light there through.

The opaque coating or film may have a thickness less than 2 mm, less than 1 mm, less than 0.5 mm, less than 0.1 mm, or less than 50 microns.

The opaque coating or film may have a thickness more than 0.5 microns, more than 1 micron, or more than 10 microns.

The opaque coating or film may have a thickness in a range of between 10 and 35 microns, preferably in a range between 20 and 25 microns.

Each of the plurality of apertures may have a major diameter less than 1 cm, less than 5 mm , less than 1 mm, less than 0.5 mm, less than 0.1 mm, less than 50 microns, less than 10 microns, preferably in a range between 2 and 5 microns, or preferably between 3 and 4 microns, or preferably 3.5 microns.

The apertures may have any suitable shape. Conveniently, the apertures may have a shape selected from a group consisting of circular, ovoid, polygonal, triangular, square and rectangular shapes.

Preferably, the plurality of apertures may be arranged in a plurality of aperture areas, each one of the plurality of aperture areas comprising one or more of the plurality of apertures.

Each one of the plurality of aperture areas may be spatially separated from the other aperture areas of the plurality of aperture areas.

Each aperture area may comprise an equal number of the plurality of apertures.

Each aperture area may comprise one or more lines of apertures.

Preferably, at least some of the plurality of aperture areas may be arranged relative to each other to collectively define a number eight (8).

The apertures of at least one of the plurality of aperture areas may be arranged such that the respective aperture area extends over a length between opposed first and second ends. The aperture area may reduce in lateral width towards the opposed first and second ends.

The respective aperture area may have a single aperture at each of the opposed first and second ends of the aperture area.

The area of the apertures of the respective aperture area may be non-uniform along the length of the aperture area to have a minimum value at the opposed first and second ends of the aperture area.

Preferably, the plurality of apertures may comprise a first set of one or more apertures and a second set of one or more apertures. The second set of one or more apertures may be arranged to partially or wholly surround the first set of one or more apertures. The second set of one or more apertures may be arranged in to define an annulus (or part of an annulus) having a shape selected from a group consisting of circular, ovoid, polygonal, triangular, square and rectangular shapes. Preferably, the second set of one or more apertures may be arranged to define an oval-shaped annulus.

Advantageously, the support structure may further comprise an opaque body, the light transmissive body comprising a first set of one or more light transmissive portions and a second set of one or more light transmissive portions. The opaque body and light transmissive portions may be configured to interconnect with each other such that the opaque body separates the first set of one or more light transmissive portions from the second set of one or more light transmissive portions. The second set of one or more light transmissive portions may be arranged to partially or wholly surround the first set of one or more light transmissive portions. The use of light transmissive portions and an opaque body which interconnect with each other provides the support structure with some i) component parts which allow for the channelling and transmission of light there through (specifically, the light transmissive portions), and other component parts which inhibit or prevent the channelling and transmission of light there through (specifically, the opaque body).

The opaque body may be formed as a single piece. Alternatively, the opaque body may be formed of two or more structurally distinct component portions.

The first set of one or more light transmissive portions may be arranged to collectively define a number eight (8). Alternatively, the first set of one or more light transmission portions may be arranged to collectively define a shape other than the number eight (8).

Preferably, a first opaque coating or film may overlie the first set of one or more light transmissive portions and a second opaque coating or film may overlie the second set of one or more light transmissive portions. The first opaque coating or film may comprise a first set of one or more apertures and the second opaque coating or film may comprise a second set of one or more apertures.

Preferably, one or both of the first and second sets of one or more apertures comprise a plurality of apertures arranged in a plurality of aperture areas. Each one of the plurality of aperture areas may comprise one or more of the plurality of apertures. For the respective first or second set of one or more apertures, each one of the plurality of aperture areas of the respective set may be spatially separated from the other aperture areas of the plurality of aperture areas of the respective set. The first set of aperture areas may be arranged to collectively define a number eight (8). Alternatively, the first set of aperture areas may be arranged to collectively define a shape other than the number eight.

There may be one or more non-light transmissive areas disposed between the aperture areas of the first set of aperture areas.

There may be no apertures disposed between adjacent aperture areas of the first set of aperture areas.

Conveniently, when light is transmitted through all of the plurality of apertures, the numeral eight ("8") may be displayed.

In accordance with a second embodiment of the present disclosure, there is provided a lighting system for an aerosol-generating system. The lighting system may comprise a plurality of light emitting elements, a first set of a plurality of lighting areas, a light guide assembly in accordance with any one of variants disclosed herein, and control electronics coupled to the plurality of light emitting elements. Each one of the lighting areas may be spatially separated from the other lighting areas. Each one of the lighting areas may comprise one or more of the plurality of light emitting elements. The light guide assembly may be arranged over the plurality of light emitting elements. The control electronics may be configured to selectively activate each one of the plurality of lighting areas.

In accordance with a third embodiment of the present disclosure, there is provided a lighting system for an aerosol-generating system. The lighting system may comprise a plurality of light emitting elements, a first set of a plurality of lighting areas, and control electronics. Each one of the lighting areas may be spatially separated from the other lighting areas. Each one of the lighting areas may comprise one or more of the plurality of light emitting elements. The control electronics may be coupled to the plurality of light emitting elements and configured to selectively activate each one of the plurality of lighting areas. The selective activation of different ones of the plurality of spatially separate lighting areas may facilitate the lighting system being able to generate different light emissions, according to which ones of the lighting areas are activated (or not activated). Dependent on the relative positioning of the spatially separate lighting areas, the selective activation of different ones of the lighting areas may allow the activated lighting areas and the light emission generated therefrom to collectively define different shapes, letters, numbers or combinations thereof.

Preferably, the light emitting elements may be in the form of one or more light emitting diodes (LEDs). LEDs are preferred due to their energy efficiency, which makes them particularly suitable for use in aerosol-generating systems which are intended to be portable and/or handheld.

There may be one or more non-light emitting areas disposed between the lighting areas of the first set of lighting areas.

There may be no light emitting areas disposed between adjacent lighting areas of the first set of lighting areas.

Conveniently, when all of the plurality of light emitting elements are illuminated, the numeral eight may be displayed.

Each one of the lighting areas may comprise an equal number of the plurality of light emitting elements.

One or more of the plurality of lighting areas may each comprise a single one of the plurality of light emitting elements. Preferably, each one of the plurality of lighting areas comprises a single one of the plurality of light emitting elements.

Advantageously, the plurality of lighting areas are arranged relative to each other to collectively define a number eight. The plurality of lighting areas may be seven in number.

Conveniently, at least some of the first set of lighting areas may be arranged relative to each other to collectively define a number eight (8).

A first pair of the plurality of lighting areas may be arranged in opposition to a second pair of the plurality of lighting areas. The lighting areas of the first pair may be arranged in co-linear relationship with each other. The lighting areas of the second pair may be arranged in co-linear relationship with each other. Three of the plurality of lighting areas may be laterally spaced apart from each other and extend between the first and second pairs of the plurality of lighting areas. It will be appreciated that by selectively activating different ones of the lighting areas, the activated lighting areas and the light emission generated therefrom may collectively define different shapes, letters, numbers or combinations thereof.

Preferably, the lighting system may further comprise an opaque shield positioned over the plurality of light emitting elements, the shield comprising a plurality of apertures for permitting the passage of light therethrough.

The plurality of apertures may preferably be arranged in a plurality of aperture areas, each one of the plurality of aperture areas comprising one or more of the plurality of apertures. Each one of the plurality of aperture areas may be spatially separated from the other aperture areas of the plurality of aperture areas. At least some of the plurality of aperture areas may be arranged relative to each other to collectively define a number eight (8). Each one of the plurality of lighting areas may be in light transmissive relationship with a different one of the plurality of aperture areas such that light from each one of the plurality of lighting areas is visible through the apertures of a corresponding aperture area. Each one of the plurality of lighting areas may be in light transmissive relationship with a different one of the plurality of aperture areas such that light from each one of the plurality of lighting areas of the first set is visible through the apertures of a corresponding aperture area. It will be appreciated that the number, size and shape of the apertures in each aperture area will influence the perception of the light emission generated from the activated lighting areas to a user located on the opposite side of the opaque shield to the lighting areas.

Each aperture area may comprise an equal number of the plurality of apertures.

Each aperture area may comprise one or more lines of apertures.

Each aperture area may be in light transmissive relationship with a single one of the plurality of light emitting elements such that light generated from the single light emitting element is visible through the apertures of the corresponding aperture area.

Advantageously, the plurality of aperture areas may be arranged relative to each other to collectively define a number eight. The plurality of aperture areas may be seven in number.

A first pair of the plurality of aperture areas may be arranged in opposition to a second pair of the plurality of aperture areas. The aperture areas of the first pair may be arranged in co-linear relationship with each other. The aperture areas of the second pair may be arranged in co-linear relationship with each other. Three of the plurality of aperture areas may be laterally spaced apart from each other and extend between the first and second pairs of the plurality of aperture areas. It will be appreciated that by selectively activating different ones of the lighting areas and dependent on the number, shape and size of the apertures in each aperture area, the light emission generated from the plurality of lighting areas, as perceived by a user located on the opposite side of the opaque shield to the lighting areas, may collectively define different shapes, letters, numbers or combinations thereof.

Advantageously, a second set of one or more lighting areas may be arranged to partially or wholly surround the first set of the plurality of lighting areas. The control electronics may be configured to selectively activate each of the first and second sets of lighting areas to generate respective first and second light emissions. The second set of lighting area(s) may collectively define a ring shape; by way of example, the ring shape may be a circle or an oval. The first set of lighting area(s) may be complementary in shape to the second set of lighting area(s). The first and second sets of lighting areas may be separated from each other by an annular gap.

In accordance with a fourth embodiment of the present disclosure, there is provided an aerosol-generating device for generating an inhalable aerosol from an aerosol-forming substrate. The aerosol-generating device may comprise a housing comprising a display window, and a lighting system in accordance with any one of variants disclosed herein. The lighting system may be disposed within the housing such that light from the plurality of lighting areas is visible via the display window.

The aerosol-generating device may further comprise an opaque shield disposed within the housing between the plurality of light emitting elements and the display window. The opaque shield may be as described in the preceding paragraphs. The opaque shield may be positioned over the plurality of light emitting elements and comprise a plurality of apertures for permitting the passage of light therethrough.

The plurality of apertures may be arranged in a plurality of aperture areas, each one of the plurality of aperture areas comprising one or more of the plurality of apertures. Each one of the aperture areas may be spatially separated from the other aperture areas of the plurality of aperture areas. Each one of the plurality of lighting areas may be in light transmissive relationship with a different one of the plurality of aperture areas such that light from each one of the plurality of lighting areas of the first set of lighting areas is visible through the apertures of a corresponding aperture area.

Each aperture area may comprise an equal number of the plurality of apertures.

Each aperture area may comprise one or more lines of apertures.

Each aperture area may be in light transmissive relationship with a single one of the plurality of light emitting elements such that light generated from the single light emitting element is visible through the apertures of the corresponding aperture area.

The aerosol-generating device may further comprise a light guide assembly disposed between the plurality of light emitting elements and the display window. The light guide assembly may be configured to direct light from the plurality of lighting areas to the display window. The opaque shield may be arranged between the plurality of light emitting elements and the light guide assembly. Alternatively, the opaque shield may be arranged between the light guide assembly and the display window.

The opaque shield may be integrated into the display window.

The control electronics may be configured to selectively activate different ones of the plurality of lighting areas singly or in combination with each other so as to generate different predetermined light emissions according to one or both of a status of the aerosol-generating device and a control input to the aerosol-generating device.

A second set of lighting areas may be arranged to partially or wholly surround the first set of the plurality of lighting areas. The control electronics may be configured to selectively activate each of the first and second sets of lighting areas to generate respective first and second light emissions.

Preferably, the control electronics may be configured to: i) selectively activate one of the first and second sets of lighting areas to generate a first predetermined light emission conveying first data indicative of a state of the aerosol-generating device; and ii) selectively activate the other of the first and second sets of lighting areas to generate a second predetermined light emission conveying second data indicative of a state of the aerosol-generating device. The first data and the second data are different from one another.

The first and second data may be indicative of any two of: a) a power source of the aerosol-generating device containing sufficient energy to complete a single usage session; b) a power source of the aerosol-generating device containing sufficient energy to complete two or more usage sessions; c) a power source of the aerosol-generating device containing a level of energy below a predetermined threshold level of energy; d) selection or activation of one of a first predetermined thermal profile and a second predetermined thermal profile, in which each of the first and second predetermined thermal profiles define a heating profile for heating of the aerosol-forming substrate by an electrical heating arrangement over a usage session, the first and second predetermined thermal profiles being different to each other; e) the aerosol-generating device being in one of a pause mode state or a reactivation state; f) selection or activation of a change in operational state of the aerosol-generating device; g) progression through a usage session; h) progression through a pre-heating phase in which an electrical heating arrangement is heated to a predetermined target temperature; i) the aerosol-generating device being in a locked state in which the device is prohibited from generating aerosol; j) the aerosol-generating device being in an unlocked state in which the device is permitted to generate aerosol; k) an entered PIN number for unlocking the device such that it is permitted to generate aerosol and/or an order of a PIN number in a sequence to be entered for unlocking the device such that it is permitted to generate aerosol; I) a type of a plurality of aerosol-generating articles being detected by the device; m) the aerosol-generating device being too hot to permit aerosol-generation; and n) the aerosol-generating device being too cold to permit aerosol-generation.

Preferably, the display window may define a touch interface of a capacitive touch sensing apparatus of the aerosol-generating device for sensing user contact with the display window.

The control electronics may be configured to selectively activate each one of the plurality of lighting areas to indicate: a) a power source of the aerosol-generating device containing sufficient energy to complete a single usage session; b) a power source of the aerosol-generating device containing sufficient energy to complete two or more usage sessions; c) a power source of the aerosol-generating device containing a level of energy below a predetermined threshold level of energy; d) selection or activation of one of a first predetermined thermal profile and a second predetermined thermal profile, in which each of the first and second predetermined thermal profiles define a heating profile for heating of the aerosol-forming substrate by an electrical heating arrangement over a usage session, the first and second predetermined thermal profiles being different to each other; e) the aerosol-generating device being in one of a pause mode state or a reactivation state; f) selection or activation of a change in operational state of the aerosol-generating device; g) progression through a usage session; h) progression through a pre-heating phase in which an electrical heating arrangement is heated to a predetermined target temperature; i) the aerosol-generating device being in a locked state in which the device is prohibited from generating aerosol; j) the aerosol-generating device being in an unlocked state in which the device is permitted to generate aerosol; k) an entered PIN number for unlocking the device such that it is permitted to generate aerosol and/or an order of a PIN number in a sequence to be entered for unlocking the device such that it is permitted to generate aerosol; I) a type of a plurality of aerosol-generating articles being detected by the device; m) the aerosol-generating device being too hot to permit aerosol-generation; and n) the aerosol-generating device being too cold to permit aerosol-generation.

In accordance with a fifth embodiment of the present disclosure, there is provided a method of fabricating a light guide assembly. The method may comprise steps of:
providing a support structure, the support structure comprising a light transmissive body, the light transmissive body configured to channel light there through towards a surface of the light transmissive body;
applying a coating or film of opaque material to the surface of the light transmissive body;
selectively removing portions of the opaque material from the coating or film to define a plurality of apertures through the coating or film for transmission there through of light channelled through the light transmissive body.

The light guide assembly resulting from the method recited above may correspond to the light guide assembly of the first aspect of the present disclosure or any of the variants thereof described herein.

The method may comprise applying the coating or film of opaque material to the surface of the light transmissive body such that the opaque coating or film has a thickness less than 2 mm, less than 1 mm, less than 0.5 mm, less than 0.1 mm, or less than 50 microns.

The method may comprise applying the coating or film of opaque material to the surface of the light transmissive body such that the opaque coating or film has a thickness more than 0.5 microns, more than 1 micron, or more than 10 microns.

The method may comprise applying the coating or film of opaque material to the surface of the light transmissive body such that the opaque coating or film has a thickness in a range of between 10 and 35 microns, preferably in a range of between 20 and 25 microns.

The method may comprise applying the coating or film of opaque material to the surface of the light transmissive body such that each of the plurality of apertures has a major diameter less than 1 cm, less than 5 mm , less than 1 mm, less than 0.5 mm, less than 0.1 mm, less than 50 microns, less than 10 microns, preferably in a range between 2 and 5 microns, or preferably between 3 and 4 microns, or preferably 3.5 microns.

The applying of the coating or film of opaque material may comprise spraying particles of opaque material onto the surface of the light transmissive body.

The selectively removing portions of the opaque material from the coating or film to define a plurality of apertures through the coating or film may comprise laser etching of the opaque material.

In accordance with a sixth embodiment of the present disclosure, there is provided a method of fabricating a light guide assembly. The method may comprise steps of:
providing a support structure, the support structure comprising a light transmissive body, the light transmissive body configured to channel light there through towards a surface of the light transmissive body;
providing a perforated film of opaque material, the perforated film comprising a plurality of apertures defined through the film;
arranging the perforated film over the surface of the light transmissive body.

As used herein, the term "aerosol-generating device" is used to describe a device that interacts with an aerosol-forming substrate to generate an aerosol. Preferably, the aerosol-generating device is a smoking device that interacts with an aerosol-forming substrate to generate an aerosol that is directly inhalable into a user's lungs thorough the user's mouth.

As used herein, the term "aerosol-generating article" refers to an article comprising an aerosol-forming substrate that is capable of releasing volatile compounds that can form an aerosol. An aerosol-generating article may be disposable.

As used herein, the term "aerosol-forming substrate" refers to a substrate consisting of or comprising an aerosol-forming material that is capable of releasing volatile compounds upon heating to generate an aerosol.

Preferably, the aerosol-forming substrate is a solid aerosol-forming substrate. However, the aerosol-forming substrate may comprise both solid and liquid components. Alternatively, the aerosol-forming substrate may be a liquid aerosol-forming substrate.

Preferably, the aerosol-forming substrate comprises nicotine. More preferably, the aerosol-forming substrate comprises tobacco. Alternatively or in addition, the aerosol-forming substrate may comprise a non-tobacco containing aerosol-forming material.

If the aerosol-forming substrate is a solid aerosol-forming substrate, the solid aerosol- forming substrate may comprise, for example, one or more of: powder, granules, pellets, shreds, strands, strips or sheets containing one or more of: herb leaf, tobacco leaf, tobacco ribs, expanded tobacco and homogenised tobacco.

Optionally, the solid aerosol-forming substrate may contain tobacco or non-tobacco volatile flavour compounds, which are released upon heating of the solid aerosol-forming substrate. The solid aerosol-forming substrate may also contain one or more capsules that, for example, include additional tobacco volatile flavour compounds or non-tobacco volatile flavour compounds and such capsules may melt during heating of the solid aerosol-forming substrate.

Optionally, the solid aerosol-forming substrate may be provided on or embedded in a thermally stable carrier. The carrier may take the form of powder, granules, pellets, shreds, strands, strips or sheets. The solid aerosol-forming substrate may be deposited on the surface of the carrier in the form of, for example, a sheet, foam, gel or slurry. The solid aerosol-forming substrate may be deposited on the entire surface of the carrier, or alternatively, may be deposited in a pattern in order to provide a non-uniform flavour delivery during use.

In a preferred embodiment, the aerosol-forming substrate comprises homogenised tobacco material. As used herein, the term "homogenised tobacco material" refers to a material formed by agglomerating particulate tobacco.

Preferably, the aerosol-forming substrate comprises a gathered sheet of homogenised tobacco material. As used herein, the term "sheet" refers to a laminar element having a width and length substantially greater than the thickness thereof. As used herein, the term "gathered" is used to describe a sheet that is convoluted, folded, or otherwise compressed or constricted substantially transversely to the longitudinal axis of the aerosol-generating article. Preferably, the aerosol-forming substrate comprises an aerosol former. As used herein, the term "aerosol former" is used to describe any suitable known compound or mixture of compounds that, in use, facilitates formation of an aerosol and that is substantially resistant to thermal degradation at the operating temperature of the aerosol-generating article.

Suitable aerosol-formers are known in the art and include, but are not limited to: polyhydric alcohols, such as propylene glycol, triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. Preferred aerosol formers are polyhydric alcohols or mixtures thereof, such as propylene glycol, triethylene glycol, 1,3-butanediol and, most preferred, glycerine.

The aerosol-forming substrate may comprise a single aerosol former. Alternatively, the aerosol-forming substrate may comprise a combination of two or more aerosol formers.

The invention is defined in the claims.

Examples will now be further described with reference to the figures in which:
Figure 1 shows a schematic illustration of a first embodiment of an aerosol-generating system according to the present disclosure.
Figure 2 shows a schematic illustration of a touch interface defined by a display window of an aerosol-generating device of the aerosol-generating system of Figure 1.
Figure 3A shows a schematic side elevation illustration of a first embodiment of a control board assembly according to the present disclosure, the control board assembly being in an unfolded state.
Figure 3B shows a schematic plan illustration of the control board assembly of Figure 3A, in the direction of A-A of Figure 3A.
Figure 3C shows a schematic side elevation illustration of the control board assembly of Figures 3A and 3B after transition from the unfolded state to a folded state.
Figure 3D shows a schematic perspective illustration from above of the control board assembly of Figure 3C.
Figure 4A shows a schematic side elevation illustration of a second embodiment of a control board assembly according to the present disclosure, the control board assembly being in an unfolded state.
Figure 4B shows a schematic side elevation illustration of the control board assembly of Figure 4A after transition from the unfolded state to a folded state.
Figure 5A shows a schematic plan illustration of a third embodiment of a control board assembly according to the present disclosure, the control board assembly being in an unfolded state.
Figure 5B shows a schematic side elevation illustration of the control board assembly of Figure 5A, in the direction of B-B of Figure 5A, after transition from the unfolded state to a folded state.
Figure 5C shows a schematic side elevation illustration of the control board assembly of Figure 5A, in the direction of C-C of Figure 5A, after transition from the unfolded state to the folded state.
Figure 6A shows a schematic side elevation illustration of the folded control board assembly of Figure 4B, along with a separate light guide assembly and a separate touch sensing module.
Figure 6B shows a schematic side elevation illustration of the control board assembly in a state subsequent to that shown in Figure 6A, after the light guide assembly has been mounted to the control board assembly.
Figure 6C shows a schematic side elevation illustration of the control board assembly in a state subsequent to that shown in Figure 6B, after the touch sensing module has been positioned over the light guide assembly to form an intermediate assembly module.
Figure 6D shows a schematic illustration of an elongate cylindrical housing of an aerosol-generating device, with the figure illustrating how the intermediate assembly module of Figure 6C is to be inserted into an opening located at an end of the housing.
Figure 6E shows a schematic illustration of the housing of the aerosol-generating device after the intermediate assembly module has been slid to a predetermined location within the housing.
Figure 6F shows a schematic illustration of a display window being installed in an aperture defined in the housing.
Figure 6G shows a schematic illustration of the aerosol-generating device after installation of the display window in the aperture.
Figure 6H shows a schematic cross-sectional illustration through section D-D of the aerosol-generating device of Figure 6G.
Figure 7A shows a schematic plan illustration of a mesh for use in forming a capacitive touch foil mesh of the touch sensing module (also referred to herein as a touch sensor) illustrated in Figure 6A.
Figures 7B to 7E illustrate examples of touch sensing modules, also referred to herein as touch sensors.
Figure 7F illustrates a circuit for detecting touch events.
Figure 8 shows a schematic perspective illustration from above of the control board assembly of Figure 3D, with a touch sensing module arranged over and coupled to the control board assembly.
Figure 9A shows a schematic illustration of an elongate cylindrical housing of an aerosol-generating device, with the control board assembly of Figure 4B preinstalled inside the housing adjacent to an aperture formed in the housing, with a separate light guide assembly and separate touch sensing module outside of the housing.
Figure 9B shows a schematic illustration of the light guide assembly being inserted through the aperture to overlie the control board assembly.
Figure 9C shows a schematic illustration of the touch sensing module being inserted through the aperture to overlie an outward-facing surface of the light guide assembly.
Figure 9D shows a schematic illustration of a display window being installed in the aperture.
Figure 9E shows a schematic illustration of the aerosol-generating device after installation of the display window in the aperture.
Figures 10A and 10B show a schematic plan illustration of a first embodiment of a lighting system prior to and after assembly respectively.
Figures 11A and 11B show a schematic plan illustration of a second embodiment of a lighting system prior to and after assembly respectively.
Figure 12 shows a schematic cross-sectional illustration of an embodiment of an aerosol-generating device incorporating the lighting system of Figure 10.
Figure 13 shows a plan view of a display window of an aerosol-generating device, in which the display window overlies the lighting system of Figure 11.
Figure 14 shows a schematic perspective illustration of an embodiment of a light guide assembly for use as part of the lighting system of the aerosol-generating device of Figure 1.
Figures 15A and 15B are representative of a first step of fabricating the light guide assembly of Figure 14, with Figures 15A and 15B showing respective front and rear schematic perspective illustrations of an opaque body and light transmissive portions of the light guide assembly
Figure 16 is representative of a second step of fabricating the light guide assembly of Figure 14, with Figure 16 showing a perspective illustration of the opaque body and light transmissive portions of Figures 15A and 15B after an opaque coating or film has been applied to surfaces of the light transmissive portions.
Figure 17 is representative of a third step of fabricating the light guide assembly of Figure 14, with Figure 17 showing a perspective illustration of apertures being laser etched through the opaque coating by a laser assembly.
Figure 18 shows a schematic perspective illustration of the components of a further embodiment of a light guide assembly and a method of manufacture thereof.
Figure 19 shows a schematic representation of an embodiment of touch-sensing control electronics for controlling operation of a capacitive touch sensor of the aerosol-generating device illustrated in the above figures.
Figure 20 shows a schematic representation of an alternative embodiment of touch-sensing control electronics for controlling operation of a capacitive touch sensor of the aerosol-generating device illustrated in the above figures.
Figure 21 shows a schematic representation of an embodiment of lighting control electronics for controlling operation of a lighting assembly of the aerosol-generating device illustrated in the above figures.
Figure 22 shows a schematic representation of an alternative embodiment of lighting control electronics for controlling operation of a lighting assembly of the aerosol-generating device illustrated in the above figures.
Figure 23 shows a schematic representation of an arrangement of intersecting row & column pins and accompanying LEDs, for use as part of a lighting assembly of the aerosol-generating device illustrated in the above figures.

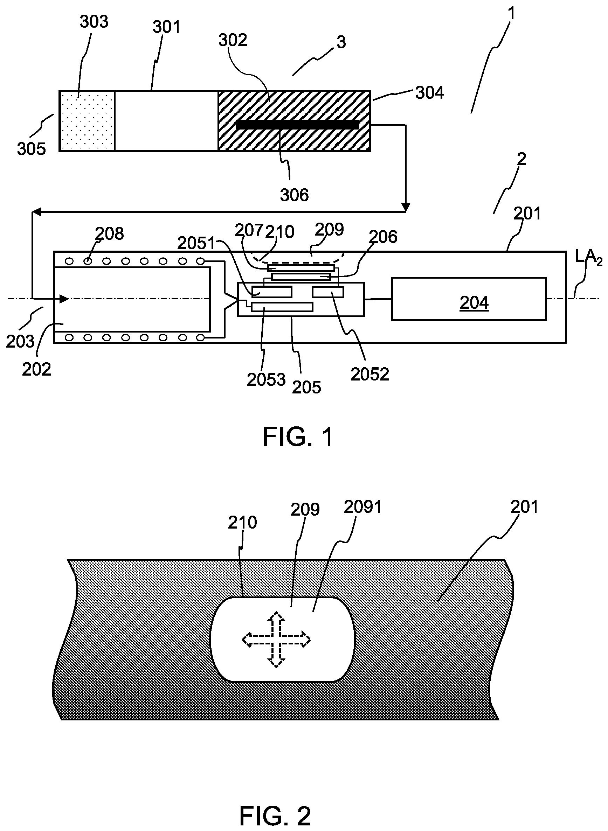

Figure 1 shows the components of an aerosol-generating system 1. The aerosol-generating system 1 has an aerosol-generating device 2 and an aerosol-generating article 3.

An embodiment which is accordance with the present invention is for example presented in figures 1 and 14 to 17.

As will be described below, the aerosol-generating device 2 is adapted to receive the aerosol-generating article 3.

The aerosol-generating article 3 has a wrapper 301 enclosing a rod of aerosol-forming substrate 302 and a mouthpiece element 303. The wrapper 301 may be a cigarette paper or similar. The rod of aerosol-forming substrate 302 is positioned at a distal end 304 of the article 3 and the mouthpiece element 303 positioned at a mouth end 305 of the article. The mouthpiece element 303 may be a filter element formed of cellulose acetate or other suitable material. A susceptor element 306 of ferromagnetic material is positioned inside the rod of aerosol-forming substrate 302.

The aerosol-generating device 2 has an elongate tubular housing 201 extending along a longitudinal axis LA₂. The elongate housing 201 may be formed of a polymer material or other material possessing suitable stiffness. The housing 201 is sized so as to be suitable for being handheld by a user. A blind cavity 202 is defined at a first end 203 of the housing 201. In the embodiment shown in Figure 1, the housing 201 is cylindrical in cross-section. The cavity 202 is sized to receive the distal end 304 of the aerosol-generating article 3 such that the cavity receives all of the length of the rod of aerosol-forming substrate 302. A power source 204, control electronics 205, lighting assembly 206 and touch sensor 207 are contained inside the interior of the housing 201. In the illustrated embodiment, the power source 204 is a rechargeable battery; for example, the battery may be a lithium-ion battery. An electric heating arrangement is also provided inside the housing. More specifically, in the illustrated embodiment of Figure 1 the electric heating arrangement is in the form of an inductor coil 208 surrounding the cavity 202. In other embodiments (not shown), the electric heating arrangement may be a resistive heating element; for example, the resistive heating element may have a blade extending from a base of the cavity 202 towards the first end 203 of the housing 201.

The control electronics 205 includes a lighting control electronics section 2051, a touch-sensing control electronics section 2052 and a heating control electronics section 2053. Although not shown in Figure 1, the control electronics 205 may also include sections relating to the control of other functions of the aerosol-generating device 2. Each of the lighting, touch-sensing and heating control electronics sections 2051, 2052, 2053 may include a controller and a memory module, the memory module containing instructions accessible by the respective controller to enable the respective control electronics section to perform one or more control functions. In the case of the embodiment of the aerosol-generating device 2 shown in Figure 1, the heating control electronics section 2053 also includes a DC/AC converter (not shown) to convert DC current provided by the battery 204 to an alternating current. As shown schematically in Figure 1, the lighting control electronics section 2051 is coupled to the lighting assembly 206, the touch-sensing control electronics section 2052 is coupled to the touch sensor 207, and the heating control electronics section 2053 is coupled to the inductor coil 208. Although not shown in Figure 1, each of the control electronics sections (lighting, touch-sensing and heating) are also communicably coupled to each other so that an input/output to or from one of the control electronics sections may result in a corresponding control input to and/or control output from another of the control electronics sections.

A display window 209 is defined in the housing 201 of the device 2. The outline of the display window 209 is shown in broken outline in Figure 1. The display window 209 is a transparent plastic insert installed in an aperture 210 defined in the housing 201 of the device 2 (see Figures 1 and 2). However, the display window 209 may be formed from other light transmissive materials, such as glass. As will be described in more detail below, the display window 209 serves as both a touch interface for a user to provide control inputs to the device 2 and a window through which one or more light emissions from the lighting assembly 206 may be viewed. The light emissions may be informative of various states of the aerosol-generating device 2. Figure 2 illustrates an outward-facing surface 2091 of the display window 209 serving as a touch interface for a user.

Prior to activation of the aerosol-generating device 2, the aerosol-generating article 3 is inserted into the cavity 202 of the device. When the article 3 has been fully inserted into the cavity 202, the length of the rod of aerosol-forming substrate 302 is surrounded by the inductor coil 208. On activation of the device 2, the heating control electronics section 2053 controls the supply of alternating electric current from the battery 204 to the inductor coil 208 in accordance with instructions contained in a memory module (not shown) of the heating control electronics section. Activation of the aerosol-generating device 2 may occur automatically on insertion of the aerosol-generating article 3 into the cavity 202 of the device (for example, a sensor may be arranged within the cavity, the sensor configured to detect insertion of the aerosol-generating article). Alternatively, the aerosol-generating device 2 may be activated by a user engaging their finger with the touch interface defined by the outward-facing surface 2091 of the display window 209, with the touch-sensing control electronics section 2052 sensing the touch event and communicating with the heating control electronics section 2053 to commence supply of current from the battery 204 to the inductor coil 208 in order to heat the aerosol-forming substrate 302 of the aerosol-generating article 3. The touch-sensing control electronics section 2052 may also communicate with the lighting control electronics section 2051 to result in the lighting assembly 206 generating a light emission informing the user of the activation of the device 2 and/or a current operational state of the device.

For the aerosol-generating device 2 illustrated in Figure 1, alternating current through the inductor coil 208 generates a magnetic field. The susceptor element 306 lies within this magnetic field. The magnetic field induces heating of the susceptor element 306 through one or both of eddy currents and magnetic hysteresis. The heating control electronics section 2053 controls the supply of current to the inductor coil 208 in accordance with a heating profile stored in a memory module of the heating control electronics section. The lighting assembly 206 may generate one or more light emissions in response to one or more control inputs by the user, and/or in response to and informative of a given state of the aerosol-generating device 2.

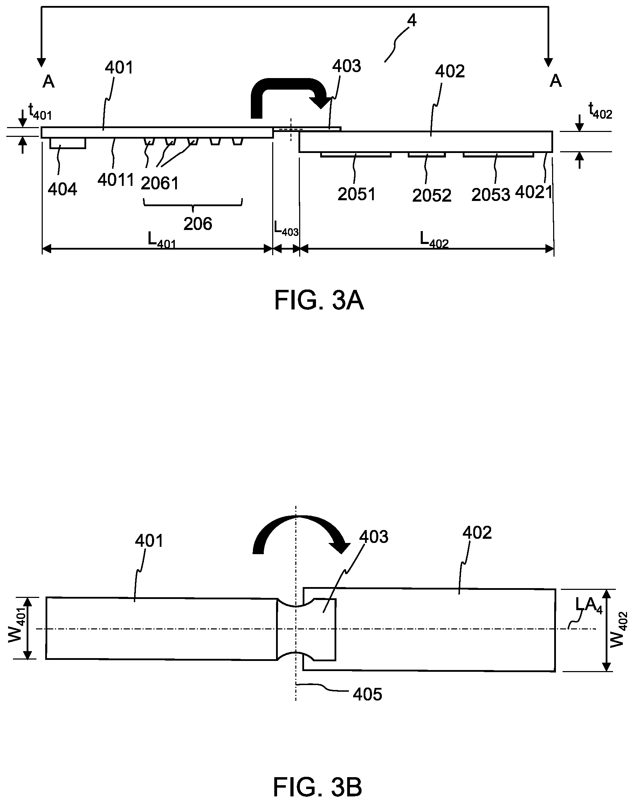

Figures 3A to 3D show a first embodiment of a control board assembly 4 for use in the aerosol-generating device 2. The control board assembly 4 contains the control electronics 205 schematically illustrated in Figure 1. The control board assembly 4 has a first elongate control board 401, a second elongate control board 402, with a hinge element 403 coupling the first and second controls boards to each other. The first control board 401 has a length L₄₀₁ of 20 millimetres, a width W₄₀₁ of 7 millimetres and a thickness t₄₀₁ of 0.7 millimetres. The second control board 402 has a length L₄₀₂ of 25 millimetres, a width W₄₀₂ of 10 millimetres and a thickness t₄₀₂ of 1 millimetre. In the unfolded state of Figure 3A, the hinge element 403 separates the longitudinal ends of the first and second control boards by a distance L₄₀₃ of 5 millimetres. In other embodiments, the first and second control boards 401, 402 may have a length dimension (L₄₀₁, L₄₀₂) in a range of 10 millimetres to 60 millimetres, or 15 millimetres to 45 millimetres, or 15 millimetres to 30 millimetres. In other embodiments, the first and second control boards 401, 402 may have a width dimension (W₄₀₁, W₄₀₂) in a range of 5 millimetres to 35 millimetres, or 5 millimetres to 25 millimetres, or 5 millimetres to 15 millimetres. In other embodiments, the first and second control boards 401, 402 may have a thickness dimension (t₄₀₁, t₄₀₂) in a range of 0.2 millimetres to 5 millimetres, or 0.2 millimetres to 3 millimetres, or 0.5 millimetres to 2 millimetres. The first control board 401 is formed from a first material composition. The second control board 402 is formed from a second material composition. The first material composition may be a polymer material, whereas the second material composition may be a ceramic material; however, it will be appreciated that other materials may be employed for the first and second material compositions. The first material composition has a lower stiffness than that of the second material composition. For the illustrated embodiment of Figures 3A to 3D, the hinge element 403 is an elongate integral extension of the first control board 401 (being formed from the first material composition), extending from one of the longitudinal ends of the first control board and coupled to the second control board 402. The coupling of the hinge element 403 to the second control board 402 may be achieved by use of adhesive between corresponding surfaces of the hinge element and the second control board to define an adhesive interface therebetween. Dependent on the choice of adhesive used, the adhesive interface may be peelable to allow uncoupling of the first and second control boards 401, 402 from each other. The coupling of the hinge element 403 to the second control board 402 may also be achieved by use of a push-fit connection interface. For the illustrated embodiment, the lighting control electronics section 2051, the touch-sensing control electronics section 2052 and the heating control electronics section 2053 are each mounted to a surface 4021 of the second control board 402. A lighting assembly 206 formed of a plurality of LEDs 2061 is arranged on a surface 4011 of the first control board 401. The lighting assembly 206 is coupled to the lighting control electronics 2051 section by means of one or more electrically conductive tracks (not shown) extending between the first and second control boards 401, 402, the tracks embedded in or overlaid on a surface of the hinge element 403. A zero interface force ("ZIF") connector 404 or similar is also provided on surface 4011 of the first control board 401. The ZIF connector 404 is provided to allow for electromechanical connection between the control board assembly 4 and a touch sensor 207 (such as the touch sensor 207 schematically shown in Figure 1). The ZIF connector 404 is coupled to the touch-sensing control electronics section 2052 by means of one or more electrically conductive tracks (not shown) extending between the first and second control boards 401, 402, the tracks embedded in or overlaid on a surface of the hinge element 403.

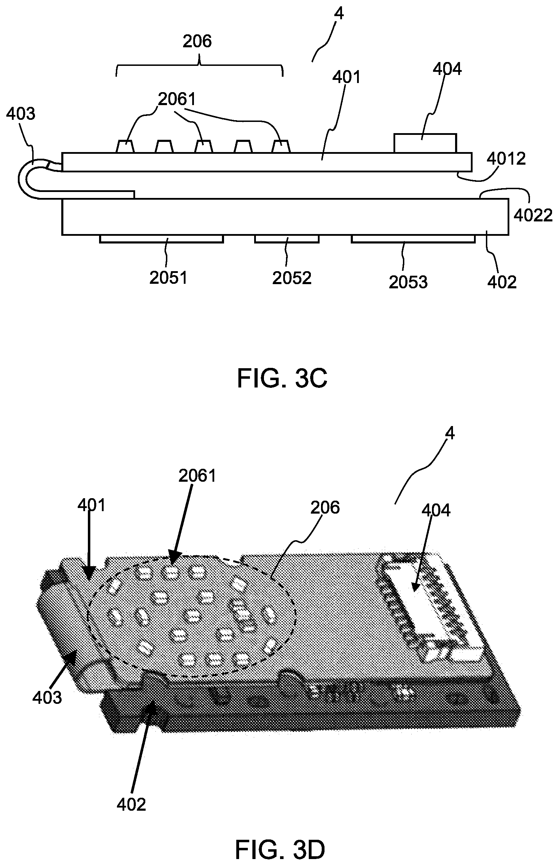

The control board assembly 4 has an initial unfolded state - as shown in Figures 3A and 3B - in which the first and second control boards 401, 402 are arranged in end to end relationship with each other, with the hinge element 403 coupling opposed longitudinal ends of the two control boards to each other. To facilitate insertion of the control board assembly 4 inside the interior of the housing 201 of the aerosol-generating device 2, the first control board 401 is folded about a fold axis 405 aligned generally perpendicular to the common longitudinal axis LA₄ of the first and second control boards so as to overlie the second control board 402. The direction of folding about the fold axis 405 is represented by arrows in Figures 3A and 3B. Figures 3C and 3D show the control board assembly 4 in the folded state. In the folded state, opposed inward-facing surfaces 4012, 4022 of the first and second control boards 401, 402 are spatially separated from each other.

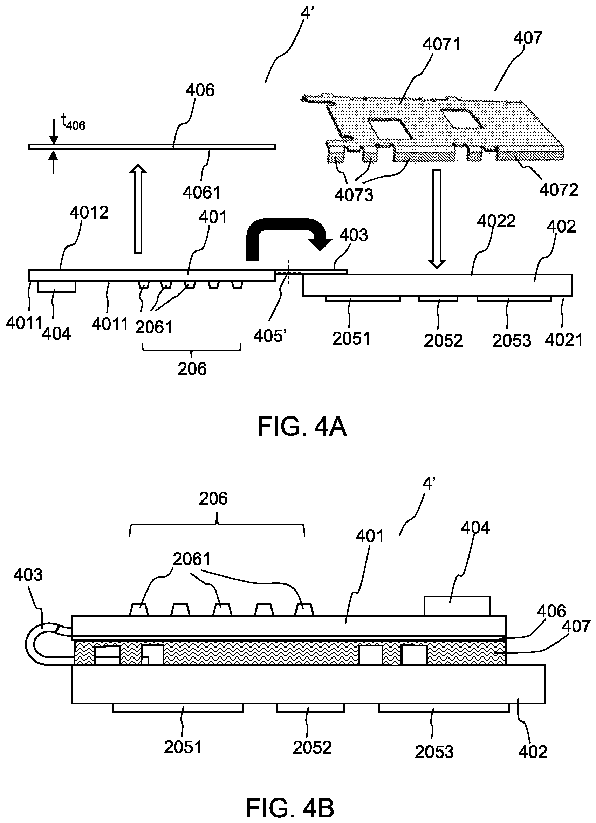

Figures 4A and 4B show a second embodiment of a control board assembly 4' for use in the aerosol-generating device 2, in unfolded and folded states respectively. This second embodiment includes all of the elements of the first embodiment of Figures 3A to 3D. However, in this second embodiment a stiffening member 406 and a separator element 407 are also provided. The stiffening member 406 is in the form of a plate formed of a material having a stiffness greater than the first material composition of the first control board 401. The stiffening member 406 may be formed from metal, plastic or any suitable material having a greater stiffness than the first material composition. The stiffening member 406 has a thickness t₄₀₆ of 0.2 millimetres. In other embodiments, the stiffening member 406 may be different in thickness. Further, the thickness chosen for the stiffening member 406 may be influenced by the choice of material used for the stiffening member and the stiffness of that material. In the unfolded state, the flexible first control board 401 is overlaid on to a support surface 4061 of the stiffening member 406. The stiffening member 406 and its support surface 4061 are generally planar. The separator element 407 is formed from a material having a stiffness greater than the first material composition of the first control board 401. In the embodiment illustrated in Figures 4A and 4B, the separator element 407 is formed of sheet metal; however, in other embodiments, alternative materials may be used for the separator element 407. A major portion 4071 of the separator element 407 is generally planar, with a pair of laterally opposed longitudinally extending edges 4072 of the separator element bent perpendicular to the major portion. In the unfolded state, the separator element 407 is positioned so that feet 4073 defined on each of the two laterally opposed longitudinally extending edges 4072 locate against surface portions of the second control board 402. To reduce the likelihood of the sheet metal of the separator element 407 resulting in a short circuit between electrical components of the first and second control boards 401, 402, the surface portions of the second control board against which the feet 4073 of the separator element 407 locate are electrically isolated from electrical circuitry of the second control board. With the stiffening member 406 and separator element 407 located against surfaces 4012, 4022 of the first control board 401 and the second control board 402 respectively, the first control board is folded about a fold axis 405' aligned generally perpendicular to the common longitudinal axis of the first and second control boards so as to overlie the second control board. The direction of folding is represented by an arrow in Figure 4A, with the fold axis 405' extending into the page. Figure 4B shows the control board assembly 4' in the folded state. The separator element 407 helps to maintain separation between the opposed inward-facing surfaces 4012, 4022 of the first and second control boards 401, 402 in the folded state.

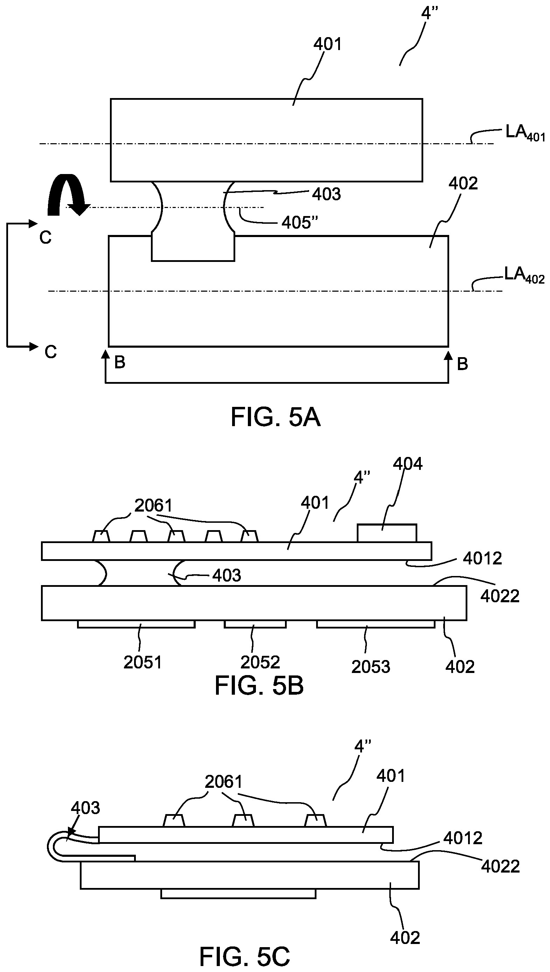

Figures 5A to 5C show a third embodiment of a control board assembly 4" for use in the aerosol-generating device 2. This second embodiment includes all of the elements of the first embodiment of Figures 3A to 3D. However, in the initial unfolded state, the first control board 401 and the second control board 402 are laterally spaced apart from each other rather than being in end to end relationship. As shown in Figure 5A, the longitudinal axes LA₄₀₁, LA₄₀₂ of the first and second control boards 401, 402 are parallel and spaced apart from each other, with the hinge element 403 extending laterally between opposed longitudinally extending edges of the first and second control boards. To facilitate insertion of the control board assembly 4" inside the interior of the housing 201 of the aerosol-generating device 2, the first control board 401 is folded about a fold axis 405" aligned generally parallel to the longitudinal axes LA₄₀₁, LA₄₀₂ of the first and second control boards to as to overlie the second control board 402. The direction of folding about the fold axis 405" is represented by an arrow in Figure 5A. Figures 5B and 5C each show the control board assembly 4" in the folded state, with Figure 5B showing a side elevation view in the direction of B-B of Figure 5A and Figure 5C showing a side elevation view in the direction of C-C of Figure 5A. Again, in the folded state, the opposed inward-facing surfaces 4012, 4022 of the first and second control boards 401, 402 are spatially separated from each other. It will be appreciated that one or both of the stiffening member 406 and the separator element 407 of the embodiment of Figures 4A and 4B may also be used in the embodiment of Figures 5A to 5C.

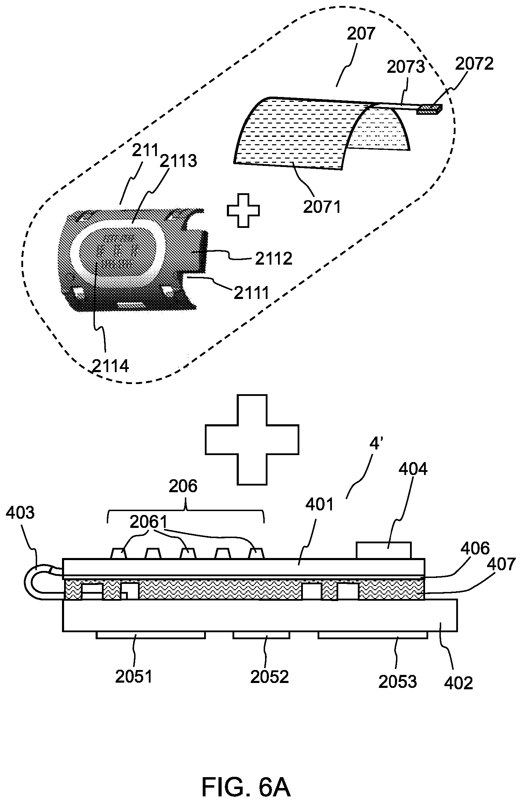

Figures 6A to 6H are provided to help illustrate a first exemplary method of assembly of the aerosol-generating device 2.

Figure 6A shows the control board assembly 4' of Figure 4B. The control board assembly 4' can be said to form a control module. Also shown in Figure 6A is a light guide assembly 211 and touch sensor 207. In the state shown in Figure 6A, the light guide assembly 211 and touch sensor 207 are uncoupled from each other and from the control board assembly 4. The light guide assembly 211 is configured for directing light between opposed inward and outward-facing surfaces 2111, 2112 of the light guide assembly and may have a plurality of channels extending between the inward and outward-facing surfaces. The outward-facing surface 2112 of the light guide assembly 211 is generally convex in profile. In use, light is directed between the inward and outward-facing surfaces 2111, 2112 of the light guide assembly 211 to emerge at two distinct regions on the outward-facing surface. These two distinct regions are an annular outer region 2113 and a central inner region 2114. The outer region 2113 surrounds the inner region 2114. For the light guide assembly 211 shown in Figure 6A, the outer region 2113 is generally continuous whereas the inner region 2114 consists of a plurality of discrete apertures.

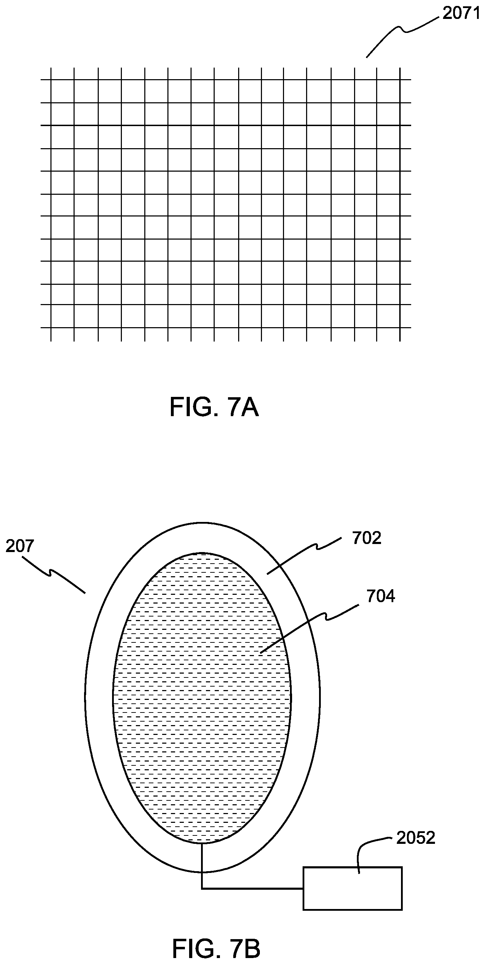

In one example, the touch sensor 207 has an electrically conductive foil mesh 2071 and a ZIF connector 2072. The ZIF connector 2072 is coupled to the foil mesh 2071 by a cable 2073. The foil mesh 2071 is formed of a mesh of copper wires spaced apart from each other, as shown in Figure 7A, with each wire of the mesh defining an electrode of the foil mesh. However, it will be appreciated that the foil mesh 2071 may be formed from electrically conductive materials other than copper, and that other types of touch sensor could be used (such as those described herein). In another example, the touch sensor 207 comprises one or more electrically conductive regions. The one or more electrically conductive regions may be arranged on an electrically insulating layer, or film. Each one of the electrically conductive regions may have a single or a plurality of electrical connections with an integrated circuit (such as a microcontroller) of the touch-sensing control electronics section 2052 for sensing one or more touch inputs.

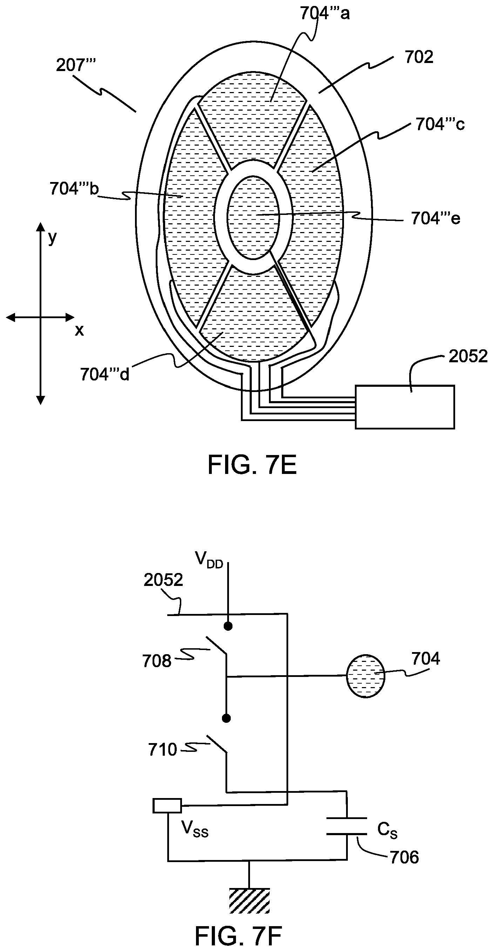

Figures 7B-E illustrate examples of touch sensors 207, each comprising one or more electrically conductive regions 704 arranged on an electrically insulating layer 702. Each electrically conductive region 704 is connected to the touch-sensing control electronics section 2052 for sensing one or more touch inputs. Figure 7F illustrates the principle of operation that enables the touch-sensing control electronics section 2052 to detect touch events.

In the touch sensor 207 shown in Figure 7B, there is a single electrically conductive region 704 arranged on an insulating layer 702. The electrically conductive region 704 is connected to the touch-sensing control electronics section 2052, which is described with reference to Figure 7F. The electrically conductive region 704 is shielded from direct electrical contact with objects outside of the aerosol-generating device 2 via the display window 209.

Referring to Figure 7F, the touch-sensing control electronics section 2052 comprises a first switch 708 and a second switch 710. The electrically conductive region 704 is electrically connected between the first switch 708 and the second switch 710. The electrically conductive region 704 may have a capacitance. The capacitance of the electrically conductive region 704 may be up to 100pF, between 5pF and 50pF, between 10pF and 30pF, or between 15pF and 25pF.

The touch-sensing control electronics section 2052 controls the first and second switches 708, 710 by opening the second switch 710 and closing the first switch 708 for a first time duration (T1). During T1, an electrical charge forms due to the capacitance of the electrically conductive region 704.

Then, the touch-sensing control electronics section 2052 opens the first switch 708 and closes the second switch 710 for a second time duration (T2). During T2, the charge accumulated at the electrically conductive region 704 is transferred to a sensing capacitor 706.

The touch-sensing control electronics section 2052 determines the time taken (Tx) for the sensing capacitor 706 to reach a voltage threshold (Vth). The determined value for Tx is indicative of a touch event. For example, Tx will be equal to a value within a certain range or above a threshold when there is no touch event; for example, when a user is not touching the display window 209. However, if there is a touch event (for example, when a user presses the display window 209 with a finger), there will be a larger capacitance at the electrically conductive region 704 and Vth will be reached more quickly. In other words, when there is a touch event, Tx will be shorter. Thus, the touch-sensing control electronics section 2052 determines that a touch event has occurred by determining that Tx is within a range associated with a touch event, or that Tx has breached a threshold associated with a touch event.

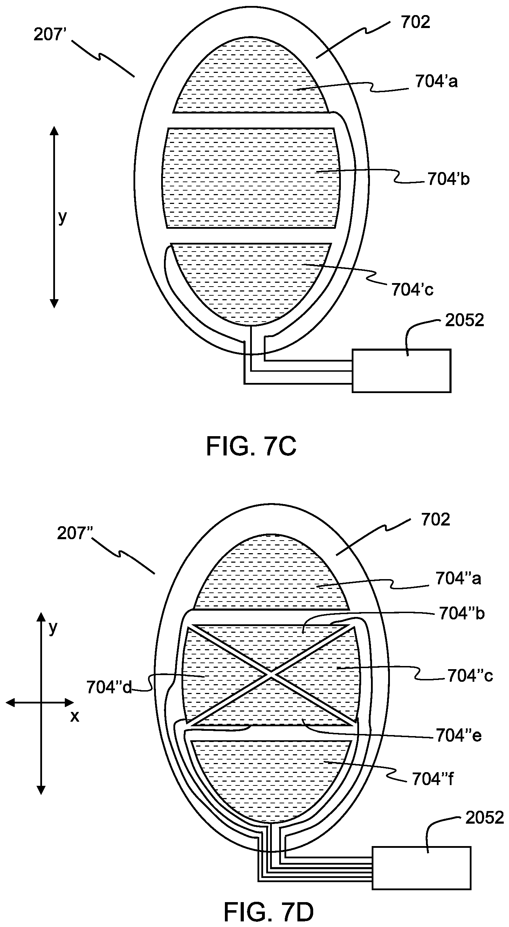

In the touch sensor 207' shown in Figure 7C, there are three electrically conductive regions 704'a, 704'b, 704'c on an electrically insulating layer 702. Each one of the electrically conductive regions 704'a, 704'b, 704'c is connected to the touch-sensing control electronics section 2052 which detects touch events as described with reference to Figure 7F.

Since there is a plurality of electrically conductive regions, the touch-sensing control electronics section 2052 can determine a region of the display window 209 that has been touched. If a touch event is detected at electrically conductive region 704'a, the touch-sensing control electronics section 2052 determines that the top of the window 209 has been touched. If a touch event is detected at electrically conductive region 704'b, the touch-sensing control electronics section 2052 determines that the middle of the window 209 has been touched. If a touch event is detected at electrically conductive region 704'c, the touch-sensing control electronics section 2052 determines that the bottom of the window 209 has been touched.

Since the touch sensor 207' has electrically conductive regions 704'a,b,c distributed along an axis y, the touch-sensing control electronics section 2052 can determine a direction of movement of a user's finger along the axis y. For instance, if a touch event is detected at electrically conductive region 704'a, then 704'b, and then 704'c, the touch-sensing control electronics section 2052 determines that the user has swiped down along the y axis. Alternatively, if a touch event is detected at electrically conductive region 704'c, then 704'b, and then 704'a, the touch-sensing control electronics section 2052 determines that the user has swiped up along the y axis. The touch-sensing control electronics may be configured to perform a function associated with a touch event at a particular electrically conductive region and/or to perform a function associated with a particular direction of movement (or gesture) performed by a user's finger.

In the touch sensor 207" shown in Figure 7D, there are six electrically conductive regions 704"a, 704"b, 704"c, 704"d, 704"e, 704"f on an electrically insulating layer 702. Each one of the electrically conductive regions 704"a, 704"b, 704"c, 704"d, 704"e, 704"f is connected to the touch-sensing control electronics section 2052 which detects touch events as described with reference to Figure 7F.

The touch-sensing control electronics section 2052 can determine a region of the display window 209 that has been touched by detecting a touch event at regions 704"a-f corresponding with a region at the window 209. The touch-sensing control electronics section 2052 detects the location of a touch event in a similar manner to as described with reference to Figure 7C.

Since the touch sensor 207" has electrically conductive regions 704"a-f distributed across a two-dimensional area, the touch-sensing control electronics can determine a direction of movement of a user's finger along an axis y and a second axis x. For instance, if a touch event is detected at electrically conductive region 704"d, and then 704"c, the touch-sensing control electronics section 2052 determines that the user has swiped right along the x axis. Alternatively, if a touch event is detected at electrically conductive region 704"c, then 704"d, the touch-sensing control electronics section 2052 determines that the user has swiped left along the x axis. Movement along the y axis can be detected in a similar manner to as described with reference to Figure 7C.

It is also possible to detect movement in a diagonal direction. For instance, the touch-sensing control electronics 2052 can determine a movement of a finger upwards and rightwards by detecting a touch event at region 704"e and then at region 704"c.

The touch-sensing control electronics may be configured to perform a function associated with a touch event at a particular electrically conductive region and/or to perform a function associated with a particular direction of movement (or gesture) performed by a user's finger.

In the touch sensor 207‴ shown in Figure 7E, there are five electrically conductive regions 704‴a, 704‴b, 704‴c, 704‴d, 704‴e on an electrically insulating layer 702. Specifically, there is a central region 704‴e surrounded by a plurality of separate regions 704‴a, 704‴b, 704‴c, 704‴d. Each one of the electrically conductive regions 704‴a, 704‴b, 704‴c, 704"'d, 704‴e is connected to the touch-sensing control electronics section 2052 which detects touch events as described with reference to Figure 7F.

The touch-sensing control electronics section 2052 can determine a region of the display window 209 that has been touched by detecting a touch event at region 704‴a-e corresponding with a region at the window 209. The touch-sensing control electronics section 2052 detects the location of a touch event in a similar manner to as described above.

Since the touch sensor 207‴ has electrically conductive regions 704‴a-e distributed across a two-dimensional area, the touch-sensing control electronics can determine a direction of movement of a user's finger along an axis y and a second axis x as described above.

The touch-sensing control electronics may be configured to perform a function associated with a touch event at a particular electrically conductive region and/or to perform a function associated with a particular direction of movement (or gesture) performed by a user's finger.

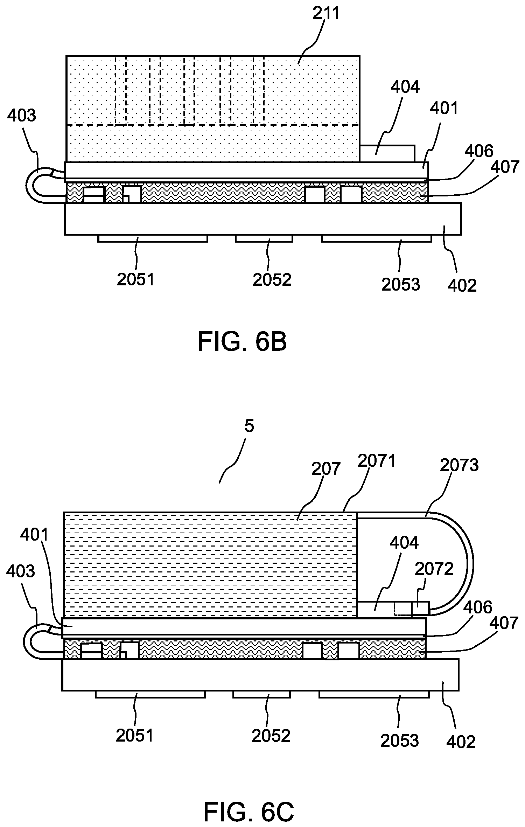

As shown in Figure 6B, subsequent to the state shown in Figure 6A, the light guide assembly 211 is mounted to the first control board 401 of the control board assembly 4' so as to overlie the lighting assembly 206.

As shown in Figure 6C, subsequent to the state shown in Figure 6B, the foil mesh 2071 of the touch sensor 207 is arranged over and in contact with the convex outward-facing surface 2112 of the light guide assembly 211. The foil mesh 2071 of the touch sensor 207 may be preformed into the convex profile illustrated in Figure 6A and then simply placed onto the convex outward-facing surface 2112 of the light guide assembly 211. Alternatively, the foil mesh 2071 of the touch sensor 207 may be initially provided in a planar state and subsequently deformed into the convex profile shown in Figure 6A during the process of overlaying the foil mesh onto the convex outward-facing surface 2112 of the light guide assembly 211. The convex profile of the foil mesh 2071 generally corresponds to the profile of the outward-facing surface 2112 of the light guide assembly 211 so that the foil mesh is in surface contact with the outward-facing surface of the light guide assembly. The ZIF connector 2072 of the touch sensor 207 is coupled to the corresponding ZIF connector 404 on the first control board 401, thereby establishing electrical communication between the foil mesh 2071 and the touch sensing control electronics section 2052 of the control board assembly 4'. The combination of the control board assembly 4', light guide assembly 211 and touch sensor 207 shown in Figure 6C forms an intermediate assembly module 5.

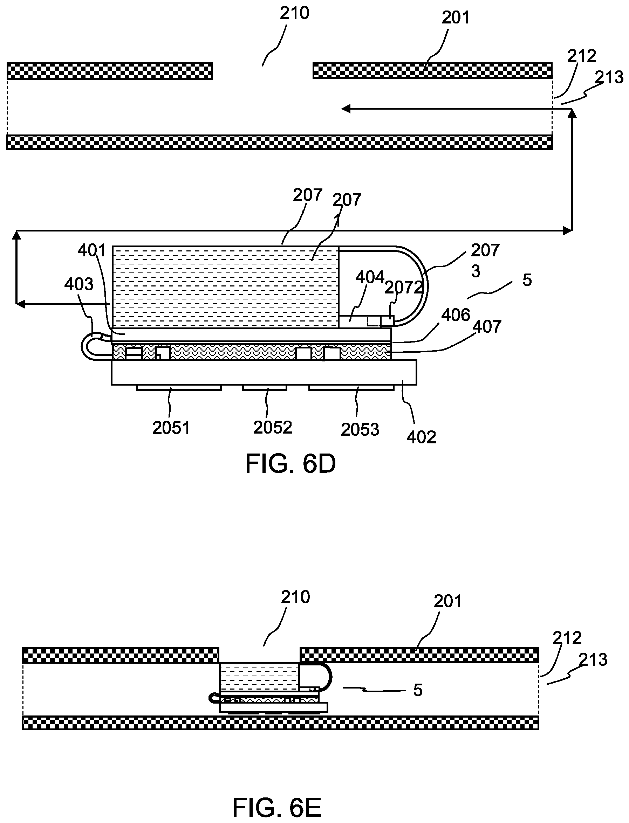

Figure 6D shows a view of a portion of the length of the elongate tubular housing 201. The housing 201 includes the aperture 210 for receiving the display window 209, but for this illustrated embodiment the display window is not yet installed in the aperture. In an alternative embodiment, the display window 209 may be preinstalled in the aperture 210. An opening 212 is defined at a second end 213 of the housing 201. The intermediate assembly module 5 is initially located adjacent to the opening 212 and is then inserted into the housing 201. More specifically, the intermediate assembly module 5 is slid along the length of the housing 201 to a predetermined location. The predetermined location corresponds to the lighting assembly 206 being positioned adjacent to the aperture 210 in the housing 201 - as shown in Figure 6E.

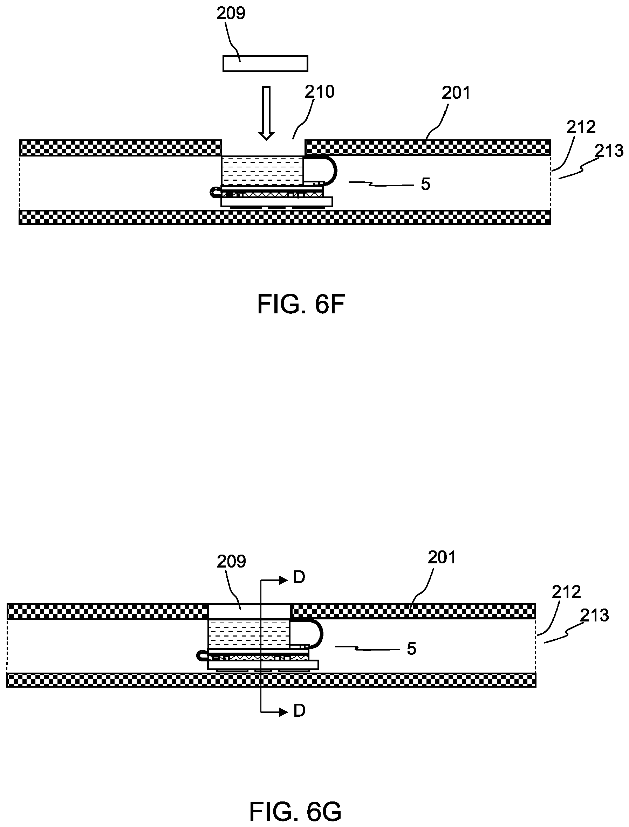

As shown in Figure 6F, subsequent to the state shown in Figure 6E, the display window 209 is installed in the aperture 210 of the housing 201 to overlie the foil mesh 2071 of the touch sensor 207. Figure 6G shows the assembled aerosol-generating device 2 after installation of the display window 209 in the aperture 210.

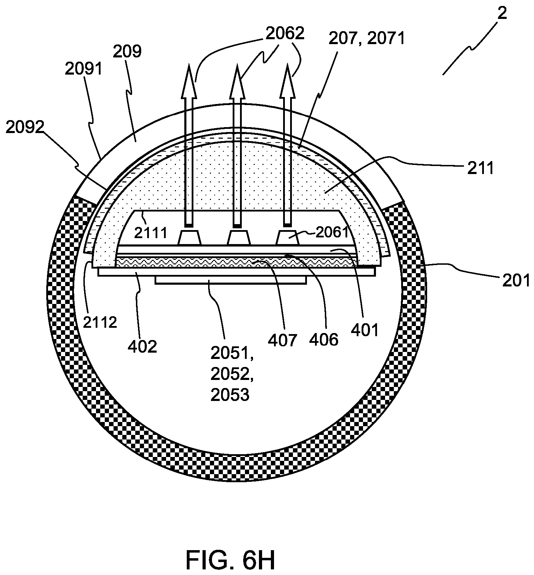

Figure 6H shows a cross-section through section D-D of Figure 6G. The display window 209 has a uniform thickness. The display window 209 also has a curvature corresponding to the curvature of the foil mesh 2071 and the outward-facing surface 2112 of the light guide assembly 211. The curvature of the display window 209 also corresponds to the curvature of the sidewall of the cylindrical elongate housing 201. The distance between a point on the outward-facing surface of the foil mesh 2071 and the outward-facing surface 2091 of the display window 209, when measured along a line normal to a point on the mesh surface, is generally uniform along the entirety of the region where the display window overlies the foil mesh. In the embodiment shown in Figure 6H, a small air gap exists between the outward-facing surface of the foil mesh 2071 and the inward-facing surface 2092 of the display window 209. However, in other embodiments, the foil mesh 2071 may be in intimate contact with the inward-facing surface 2092 of the display window 209 such that the foil mesh is effectively sandwiched between the outward-facing surface 2112 of the light guide assembly 211 and the inward-facing surface 2092 of the display window 209.

In use, light emitted by the LEDs 2061 of the lighting assembly 206 passes through channels defined between the inward and outward-facing surfaces 2111, 2112 of the light guide assembly 211, and then through the foil mesh 2071 of the touch sensor 207, to be transmitted through the display window 209. Contact between a user's finger and a location on the outward-facing surface 2091 of the display window 209 results in a change in capacitive coupling between adjacent wires of the foil mesh 2071 at the location on the mesh immediately underlying the touch location. More specifically, contact of the user's finger with the display window 209 has the effect of reducing capacitive coupling between adjacent wires of the foil mesh 2071 underlying the contact location; this corresponds to a mutual capacitance mode of operation of the touch sensor 207. This change in capacitive coupling is detected by the touch-sensing control electronics section 2052. The nature of the touch input may be determined by the touch-sensing control electronics section 2052; for example, the touch sensing control electronics may identify whether the user's finger slides over the outward-facing surface 2091 of the display window 209 or engages with the surface 2091 at a single point. The touch-sensing control electronics section 2052 may generate an output signal in response to and dependent on the nature of the touch input. This output signal may be communicated to one or both of the lighting control electronics section 2051 and the heating control electronics section 2053. Where the output signal is conveyed to the lighting control electronics section 2051, the lighting control electronics section may generate a light emission 2062 from the light emitting elements 2061. The nature of the light emission 2062 (for example, colour, luminance, duration or periodicity of the light emission) may be dependent on the nature of the touch input. Where the output signal is conveyed to the heating control electronics section 2053, the heating control electronics section may act to initiate or pause the flow of current to the inductor coil 208 of the aerosol-generating device 2.

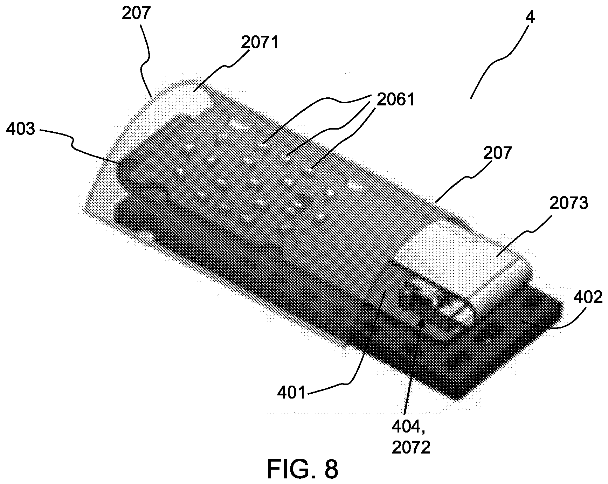

Figure 8 illustrates an embodiment in which the touch sensor 207 is coupled to the control board assembly 4 of Figure 3D, but without the presence of a light guide assembly 211. For the embodiment of Figure 8, the foil mesh 2071 of the touch sensor 207 is preformed into a convex profile prior to the ZIF connector 2072 of the touch sensor being connected to ZIF connector 404 of the first control board 401. The curvature of the convex profile of the foil mesh 2071 generally corresponds to the curvature of the inward-facing surface 2092 of the display window 209 and/or the inner surface of the cylindrical elongate housing 201 of the aerosol-generating device 2.

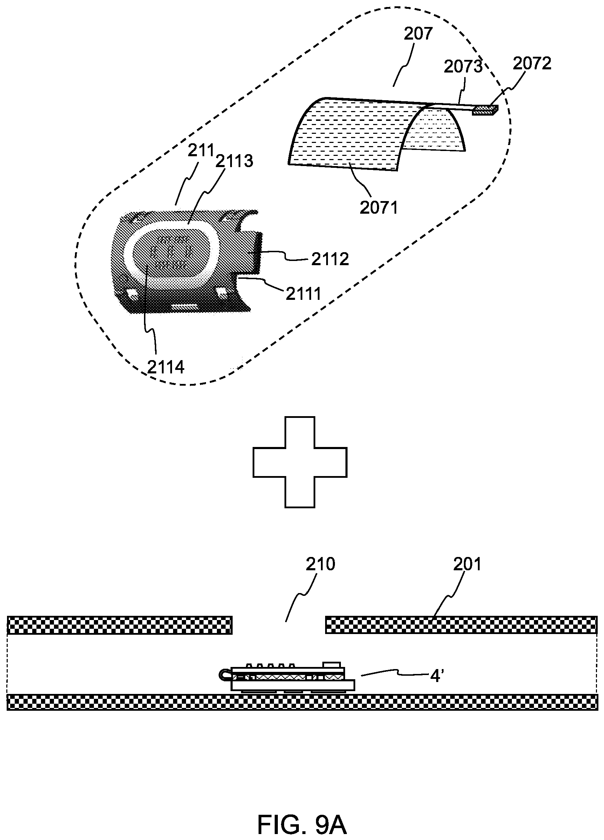

Figures 9A to 9E are provided to help illustrate a second exemplary method of assembly of the aerosol-generating device 2.

Figure 9A shows the control board assembly 4 of Figures 3C and 3D preinstalled inside the elongate tubular housing 201 at a position adjacent to and under the aperture 210 defined in the housing. The display window 209 has not yet been installed in the aperture 210. Also shown in Figure 9A is the light guide assembly 211 and touch sensor 207. In the state shown in Figure 9A, the light guide assembly 211 and touch sensor 207 are uncoupled from each other and from the control board assembly 4.

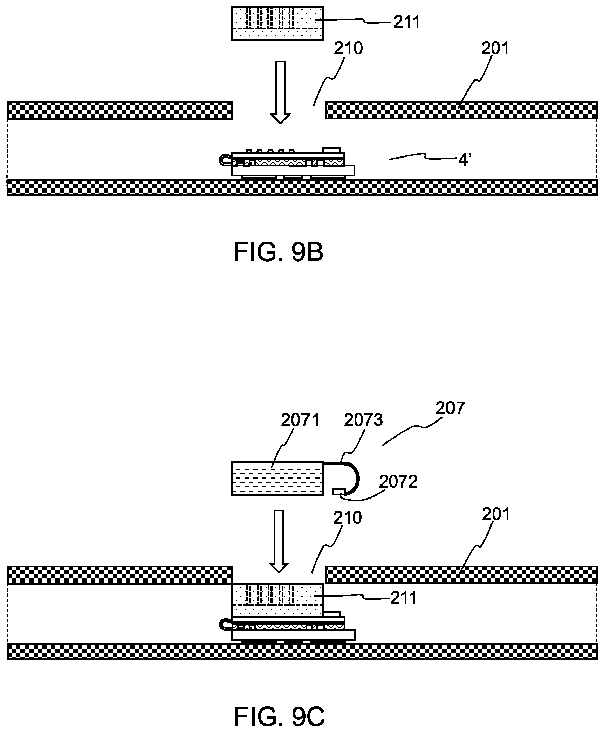

As shown in Figure 9B, the light guide assembly 211 is inserted into or dropped through the aperture 210 so as to overlie the lighting assembly 206. Figure 9C shows the light guide assembly 211 after insertion and positioning over the lighting assembly 206.

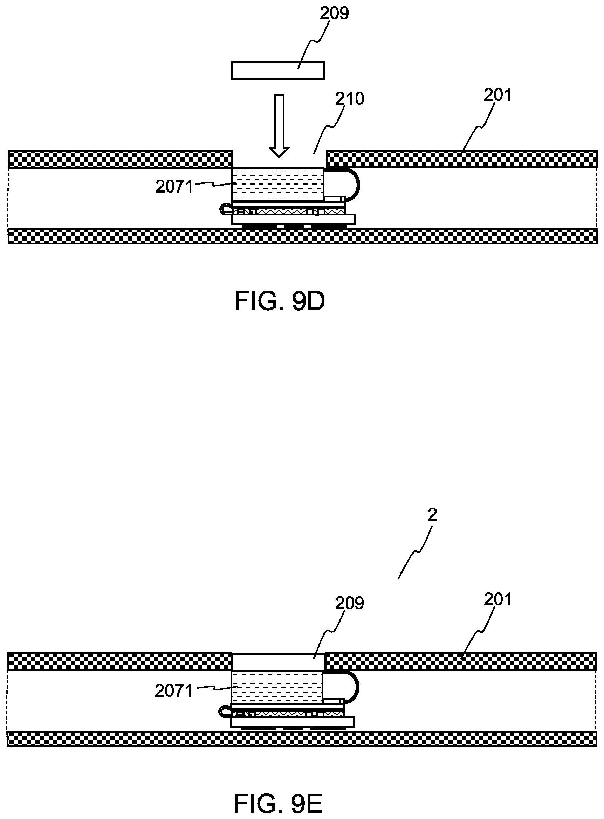

Figure 9C also shows that after insertion and positioning of the light guide assembly 211, the touch sensor 207 is then inserted into or dropped through the aperture 210 so that the foil mesh 2071 of the touch sensor 207 is arranged over and in contact with the convex outward-facing surface 2112 of the light guide assembly 211. The cable 2073 is of sufficient length such that, prior to insertion of the foil mesh 2071 through the aperture 210, the ZIF connector 2072 of the touch sensor 207 is able to be connected to the ZIF connector 404 of the first control board 401. Figure 9D shows the touch sensor 207 after insertion and positioning over the light guide assembly 211. In other embodiments, the light guide assembly 211 and touch sensor 207 may be pre-assembled outside of the housing 201 to form a combined assembly module, with the combined assembly module inserted into or dropped through the aperture 210 to couple with the control board assembly 4.

Figure 9D also shows the installation of the display window 209 in the aperture 210, with Figure 9E showing the assembled aerosol-generating device 2 after installation of the display window 209 in the aperture 210.

As can be understood from comparison of Figures 9E and 6G, the first and second methods of assembly ("slide-inside" and "drop-in" respectively) are able to result in the same configuration of the aerosol-generating device.

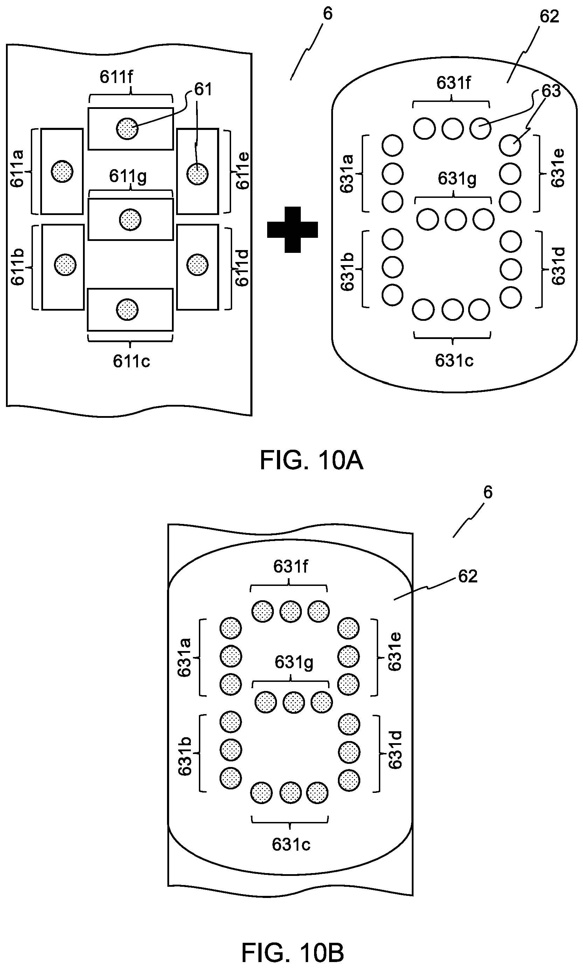

Figure 10A shows a first embodiment of a lighting system 6 prior to assembly. The lighting assembly has a plurality of LEDs 61 and an opaque shield 62. The plurality of LEDs 61 are grouped in a plurality of lighting areas 611. For the embodiment of Figure 10A, there are seven lighting areas 611a-g, each lighting area having a single one of the LEDs 61. In other examples, there may be a plurality of LEDs 61 per lighting area 611; for example, there may be 2, 3, 4 or more LEDs 61 per lighting area. The opaque shield 62 is formed of plastic; however, it will be appreciated that other materials may be used which are non-transmissive to the passage of light. The opaque shield 62 is formed with a plurality of apertures 63. The plurality of apertures 63 are grouped in a plurality of aperture areas 631. For the embodiment of Figure 10A, there are seven aperture areas 631a-g. The apertures 63 of each aperture area 631a-g are arranged in co-linear relationship with each other, with each aperture area having a line of three apertures in this example. In another example, each aperture area may have a plurality of lines of apertures (for example, 2, 3, 4 or more lines), each line of apertures comprising 2, 3, 4, or more apertures. The aperture areas are positioned relative to each other so as to define the shape of the number '8'.

Figure 10B shows the lighting system 6 in an assembled state, in which the opaque shield 62 is positioned over the plurality of LEDs 61. The aperture areas 631a-g are arranged across the area of the opaque shield 62 such that in the assembled state, each one of the aperture areas 631a-g overlies a corresponding single one of the lighting areas 611a-g. So, in use of the lighting system 6, light from the single LED 61 of lighting area 611a is visible through the three apertures 63 of aperture area 631a; the same correspondence applies to each of the remaining lighting areas 611b-g and aperture areas 631b-g. The LEDs 61 of the plurality of lighting areas 611a-g are designed to be driven by control electronics (for example, the lighting control electronics section 2051 described above). By selectively activating different ones of the lighting areas 611a-g alone or in combination with each other, the lighting system 6 is able to generate light emissions defining the form of different numbers, letters or shapes.

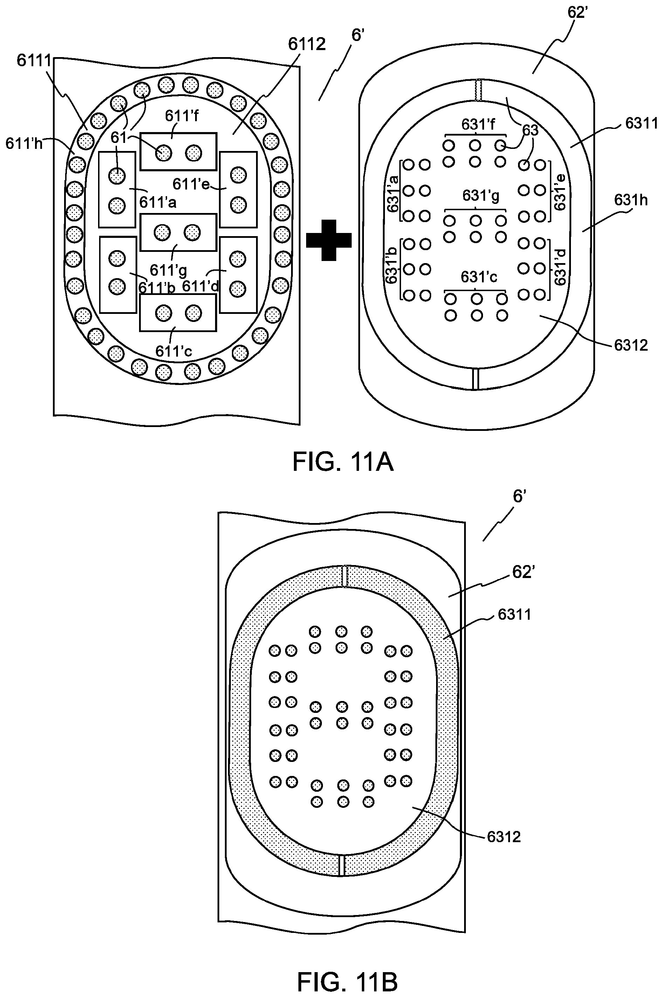

Figure 11A shows a second embodiment of a lighting system 6' prior to assembly. The lighting assembly 6' has a plurality of LEDs 61 and an opaque shield 62'. The plurality of LEDs 61 are grouped in a plurality of lighting areas 611'a-h. The lighting area 611'h of LEDs 61 forms a first set 6111 of the plurality of lighting areas and is generally in the shape of an oval ring. The lighting areas 611a-g of LEDs 61 form a second set 6112 of the plurality of lighting areas and is generally in the form of an oval. As can be seen from Figure 11A, the first set 6111 surrounds the second set 6112. Each of lighting areas 611'a-g has two LEDs 61. The plurality of apertures 63 of the opaque shield 62' are grouped in a plurality of aperture areas 631'. For the embodiment of Figure 11A, there are eight aperture areas 631'a-h. The aperture area 631h forms a first set 6311 of the plurality of aperture areas and is generally in the shape of an oval ring. The aperture areas 631'a-g form a second set 6312 of the plurality of aperture areas. The apertures 63 of aperture areas 631'a-g are arranged in two parallel lines of three apertures 63. The second set 6312 of aperture areas are positioned relative to each other so as to define the shape of the number '8'.

Figure 11B shows the lighting system 6' in an assembled state, in which the opaque shield 62' is positioned over the plurality of LEDs 61. The aperture areas 631'a-h are arranged across the area of the opaque shield 62' such that in the assembled state, each one of the aperture areas 631'a-h overlies a corresponding single one of the lighting areas 611'a-h. So, in use of the lighting system 6', light from the two LEDs of lighting area 611'a is visible through the six apertures 63 of aperture area 631'a; the same correspondence applies to each of the remaining lighting areas 611'b-h and aperture areas 631'b-h. The LEDs of the plurality of the lighting areas 611'a-h are designed to be driven by control electronics (for example, the lighting control electronics section 2051 described above). The LEDs 61 forming the first set 6111 of the plurality of lighting areas may be controlled to all be activated simultaneously, thereby illuminating to define the shape of an oval ring. Alternatively, the control electronics may instead activate only a subset of the LEDs 61 of the first set 6111. By selectively activating different ones of the lighting areas 611'b-g, which make up the second set 6112, alone or in combination with each other, the lighting system 6' is able to generate a light emission defining the form of different numbers, letters or shapes. Where the lighting system 6' is installed in an aerosol-generating device (such as device 2 discussed above), the control electronics may be configured to selectively activate one of the first and second sets 6111, 6112 of lighting areas 611'a-h to generate a first light emission corresponding to a first state of the device 2, and to selectively activate the other of the first and second sets of lighting areas to generate a second light emission corresponding to a second state of the device. The first and second light emissions may be different to each other; for example, in one or more of colour, luminance, duration, periodicity. The first and second states may correspond to any given state of the device 2. By way of example, the first and second states may include: a) the power source 204 of the aerosol-generating device 2 containing sufficient energy to complete a single usage session; b) the power source 204 containing sufficient energy to complete two, three or more usage sessions; c) the power source 204 containing a level of energy below a predetermined threshold level of energy; d) selection or activation of one of a first predetermined thermal profile and a second predetermined thermal profile, in which each of the first and second predetermined thermal profiles define a heating profile for heating of the aerosol-forming substrate 302 by an electrical heating arrangement (for example, inductor coil 208) over a usage session, the first and second predetermined thermal profiles being different to each other; e) the aerosol-generating device 2 being in one of a pause mode state or a reactivation state; f) selection or activation of a change in operational state of the aerosol-generating device 2; g) progression through a usage session; h) progression through a pre-heating phase in which an electrical heating arrangement (for example, inductor coil 208) is heated to a predetermined target temperature; i) the aerosol-generating device being in a locked state in which the device is prohibited from generating aerosol; j) the aerosol-generating device being in an unlocked state in which the device is permitted to generate aerosol; k) a PIN number for unlocking the device such that it is permitted to generate aerosol; I) a type of a plurality of aerosol-generating articles being detected by the device; m) the aerosol-generating device being too hot to permit aerosol-generation; and n) the aerosol-generating device being too cold to permit aerosol-generation.

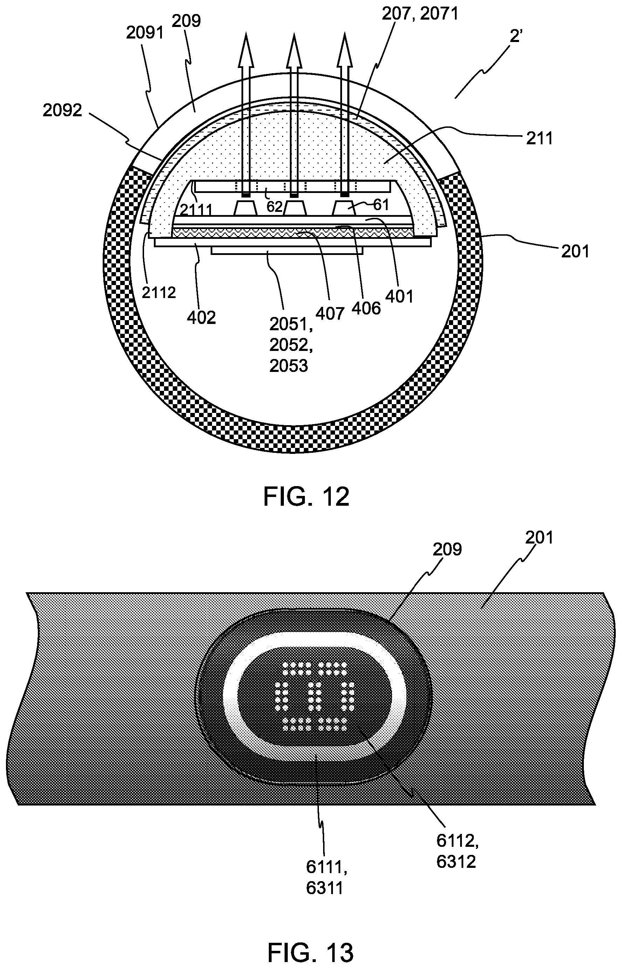

Figure 12 shows a schematic cross-sectional illustration of an embodiment of the aerosol-generating device 2' incorporating the lighting system 6 of Figure 10. The embodiment of Figure 12 includes all of the features of the aerosol-generating device shown in Figure 6H. As can be seen in Figure 12, the LEDs 61 of the lighting system 6 are arranged on surface 4011 of the first control board 401. The opaque shield 62 of the lighting system 6 is arranged between the LEDs 61 and light guide assembly 211. In an alternative embodiment, the opaque shield 62 may instead be overlaid on the outward-facing surface 2112 of the light guide assembly 211. In a further alternative embodiment, the opaque shield 62 may be incorporated into the structure of the display window 209.

Figure 13 shows a plan view of a display window 209 of an aerosol-generating device 2, in which the display window overlies the lighting system 6' of Figure 11. Figure 13 represents a state in which all of the LEDs 61 are activated, resulting in the first set 6111 (i.e. lighting area 611'h) illuminating through the first set 6311 of aperture area 631'h to define the shape of an illuminated oval, and the second set 6112 of lighting areas 611'a-g illuminating through the second set 6312 of aperture areas 631'a-g to define the shape of an illuminated figure '8'. It will be appreciated that the presence of the foil mesh 2071 of touch sensor 207 under the display window 209 also permits the outward-facing surface of the display window to also serve as a touch interface for a user's finger(s).

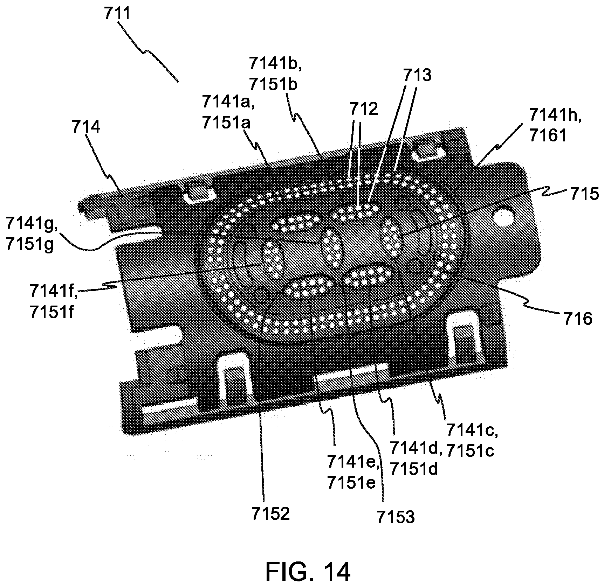

Figure 14 is a schematic perspective illustration of an embodiment of a light guide assembly 711. A plurality of apertures 712 are defined through a coating or film 713 of opaque material that is applied to surfaces of a support structure 714 of the light guide assembly 711. The coating or film 713 is applied to eight different surface regions of the support structure 714 - the surface regions indicated in Figure 14 by reference signs 7141ah. The opaque coating or film 713 may be a polymer film or a layer of paint. The opaque coating or film 713 has a thickness in a range of between 20 and 25 microns. In other embodiments, the opaque coating or film 713 may have a different thickness - for example, ranging between 0.5 microns and 2 mm. The opaque coating or film 713 inhibits or prevents the transmission of light there through. The plurality of apertures 712 are arranged as an inner set 715 of apertures and an outer set 716 of apertures. The inner set 715 is surrounded by the outer set 716. Each of the apertures 712 are circular in shape, each aperture having a diameter of 3.5 microns. In other embodiments, the apertures 712 may have any other desired shape and/or size. For example, the apertures 712 may be oval in shape, polygonal in shape, square in shape, or rectangular in shape, and/or have a major diameter in a range of less than 1 cm, less than 5 mm, less than 1 mm, less than 0.5 mm, less than 0.1 mm, less than 50 microns, less than 10 microns, preferably in a range between 2 and 5 microns, or preferably between 3 and 4 microns.

The apertures 712 of the inner set 715 of apertures are arranged in seven aperture areas 7151a-g to collectively define the shape of the numeral eight ("8"). Each aperture area 7151a-g defines a group of apertures. The seven aperture areas 7151a-g correspond to surface regions 7141a-g of the support structure 714. In other embodiments, the inner set 715 of apertures may be arranged in a greater or lesser number of aperture areas 7151 than seven; further, the aperture areas 7151 may be arranged relative to each other according to whatever shape or configuration is desired. Each aperture area 7151a-g of the inner set 715 is spatially distinct from the other aperture areas of the inner set 715. The areas between each of the aperture areas of the inner set 715 of aperture areas 7151a-g are non-light transmissive areas. There are no apertures disposed between adjacent aperture areas of the inner set 715 of aperture areas 7151a-g. When light is transmitted through all of the plurality of apertures 712, the numeral eight ("8") is displayed.

For the embodiment illustrated in Figure 14, the apertures 712 of each aperture area 7151a-g (i.e. the aperture areas of inner set 715) are arranged such that each aperture area extends linearly between opposed first and second ends 7152, 7153. A single aperture 712 is positioned at each of the opposed first and second ends 7152, 7153 of each linearly extending aperture area 7151a-g. Inwards of the opposed first and second ends 7152, 7153, each aperture area 7151a-g has a width defined by two apertures 712 spaced in side-by-side relationship. So, each linearly extending aperture area 7151a-g has a width having a minimum value at the location of the opposed first and second ends 7152, 7153.

The apertures 712 of the outer set 716 of apertures are arranged in a single aperture area 7161, the single aperture area defining an oval annulus in shape. The single aperture area 7161 corresponds to surface region 7141h of the support structure 714.

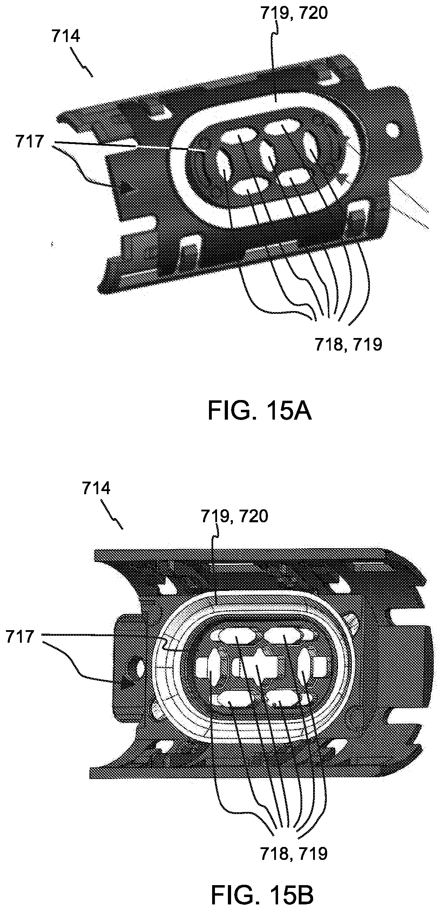

Figures 15A and 15B show front and rear schematic perspective illustrations of the support structure 714 of the light guide assembly 711 prior to application of the opaque coating or film 713 to surface regions 7141a-h of the support structure 714. The support structure 714 has an opaque body 717 (shown in the embodiment of Figure 14 as having two component parts), an inner set 718 of light transmissive portions 719 and an outer set 720 of light transmissive portions 719. The opaque body 717 is formed of a material which inhibits or prevents the transmission of light there through. By way of the example, the opaque body 717 may be formed from an opaque plastic. The light transmissive portions 719 are formed from a material which is transparent to the transmission of light. By way of example, the light transmissive portions 719 may be formed from a transparent plastic or glass. The inner and outer sets 718, 720 of light transmissive portions 719 fit within slots defined in the opaque body 717. The light transmissive portions 719 and opaque body 717 may be adapted to provide a snap-fit connection between each light transmissive portion and the opaque body. The inner set 718 of light transmissive portions 719 are seven in number and are arranged to collectively define the shape of the numeral "8". Each light transmissive portion 719 of the inner set 718 is linear in plan view. The outer set 720 of light transmissive portions 719 are positioned in end-to-end relationship to collectively define an oval-shaped annulus (see Figure 15B). The oval-shaped annular outer set 720 of light transmissive portions 719 is arranged to surround the inner set 718 of light transmissive portions.

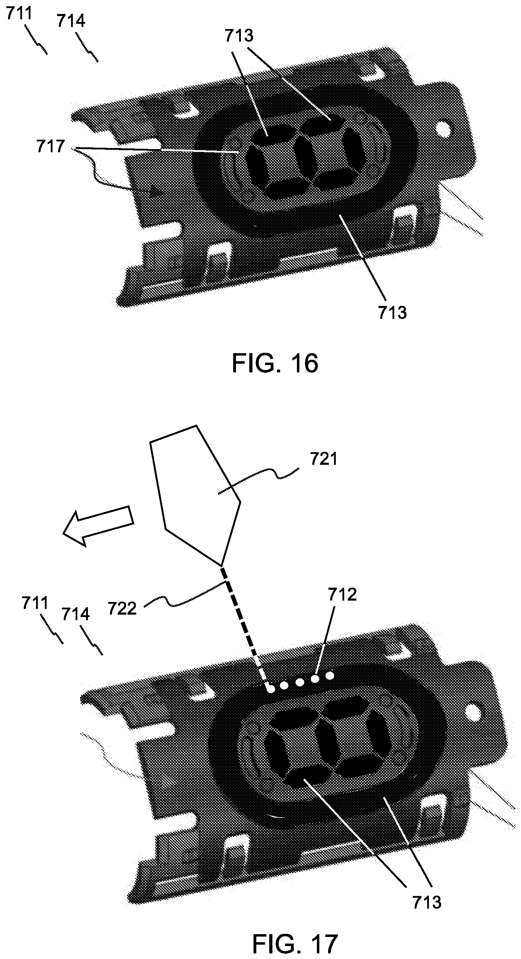

The coating or film 713 may be applied by spraying an opaque material onto the surfaces of the inner and outer sets 718, 720 of light transmissive portions 719, with the resulting coating or film 713 shown in the perspective illustration of Figure 16. The surfaces of the light transmissive portions 719 onto which the opaque material is applied correspond to the surface regions 7141a-h of the support structure 714. The opaque film or coating 713 functions as a barrier to light transmitted through the light transmissive portions 719.

Figure 17 shows a laser assembly 721 positioned over the light guide assembly 711 above the opaque film or coating 713. The laser assembly 721 traverses over the opaque film or coating 713 and is selectively activated to emit a beam 722 of laser radiation towards the opaque coating or film 713. When the laser assembly 721 is activated, the laser beam 722 acts to remove portions of material from the opaque coating or film 713 to define the apertures 712 in the coating or film. The process of using a laser to remove portions of material from the opaque coating or film 713 is known as laser etching. Figure 17 illustrates how the laser assembly 721 has been used to define five apertures 712 in the opaque film or coating 713 applied to the outer set 720 of light transmissive portions 719. The mode of operation of the laser assembly 721 as described in this paragraph may be repeated to provide a plurality of apertures 712 corresponding to that shown for the light guide assembly 711 of Figure 14.

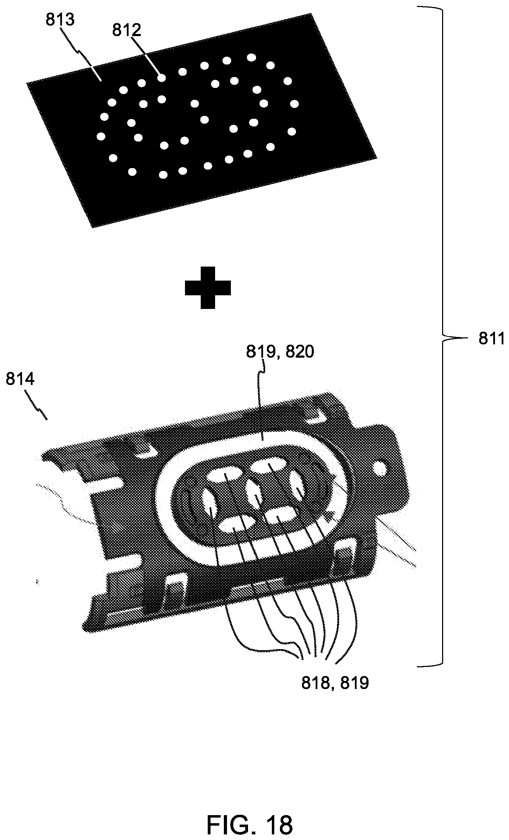

Figure 18 illustrates an alternative embodiment in which a light guide assembly 811 is manufactured. In this alternative embodiment, a perforated film 813 of opaque material is provided. The perforated film 813 is pre-formed with a plurality of apertures 812. For the illustrated embodiment of Figure 18, the perforated film 813 is pre-formed with an inner set of apertures 812 and an outer set of apertures 812 generally corresponding to the pattern defined by the plurality of apertures 712 shown for the light guide assembly 711 of Figure 14. The perforated film 813 is laid over the surface of the support structure 814 of the light guide assembly 811 to cover inner and outer sets 818, 820 of light transmissive portions 819, as well as the surfaces of the opaque body 814 between the light transmissive portions 819. The perforated film 813 has a thickness in a range of between 20 and 25 microns. In other embodiments, the perforated film 813 may have a different thickness - for example, ranging between 0.5 microns and 2 mm. Although the pre-formed apertures 812 of the film 813 are shown as being circular in shape, in common with the light guide assembly 711 of Figure 14, the apertures 812 may be oval in shape, polygonal in shape, square in shape, or rectangular in shape. The preformed apertures 812 may also have a major diameter in common with that described above for the apertures 712 of the light guide assembly 711 of Figure 14. The light guide assemblies 711, 811 of Figures 14 to 18 may be used in place of the light guide assembly 211 described above in relation to Figures 6A to 6H, and Figures 9A to 9E. Further, it will be appreciated that the opaque film or coating 713, 813 described in relation to the light guide assemblies of Figures 14 to 18 may be used in place of the opaque shield 62 , 62' described above in relation to Figures 10A-10B and 11A-11B.

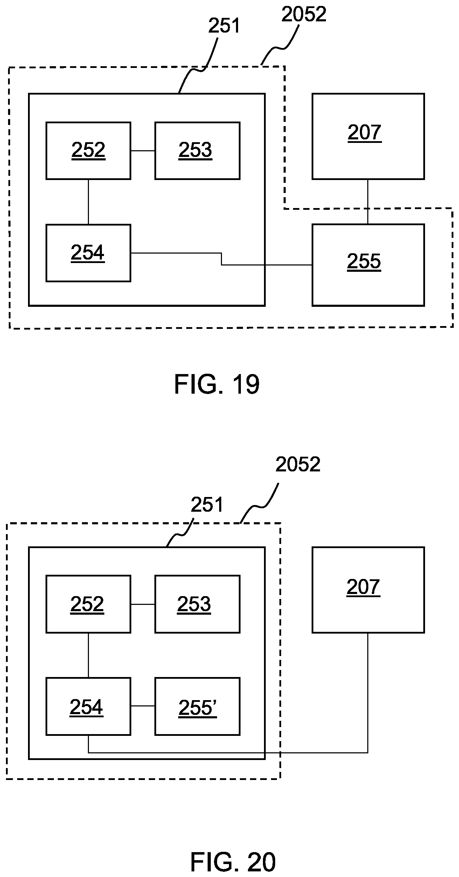

Figure 19 is a schematic representation of an exemplary embodiment of the touch-sensing control electronics section 2052 for controlling operation of the capacitive touch sensor 207 of the aerosol-generating device 2 illustrated in the above figures. The touch sensing control electronics section 2052 is shown in broken outline in Figure 19. The touch sensing control electronics section 2052 has a microcontroller 251 containing a processor 252, memory 253 and input-output means 254. The touch sensing control electronics section 2052 also has a touch sensor driver 255. The touch sensor driver 255 is separate to the microcontroller 251 but communicably coupled thereto via the input-output means 254. The touch sensor driver 255 is also communicably coupled to the touch sensor 207. The touch sensor driver 255 detects a touch event based on electrical signals from the touch sensor 207 in response to occurrence of the touch event; the touch event might be a user's finger having contacted the outward-facing surface 2091 of the display window 209. After determining the occurrence of the touch event, the touch sensor driver 255 sends one or more data signals to the microcontroller 251 via the input-output means 254, the data signals being indicative of the occurrence of the touch event. After the microcontroller 251 receives the data signals, the processor 252 accesses instructions contained in the memory 253 and generates one or more control signals for communicating to one or more of the lighting control electronics section 2051, the heating control electronics section 2053 and other control electronics sections of the aerosol-generating device 2. In this manner, the occurrence of a touch event on the display screen 209 is able to result in one or more control inputs to control one or more of the lighting assembly 206 (or the lighting system 6, 6'), the inductor coil 208 and other features of the aerosol-generating device 2.

Figure 20 is a schematic representation of an alternative exemplary embodiment of the touch-sensing control electronics section 2052 for controlling operation of the capacitive touch sensor 207 of the aerosol-generating device 2. This embodiment differs from the embodiment of Figure 19 in that the microcontroller 251 contains touch sensing circuitry 255', rather than using a separate touch sensor driver 255. The touch sensing circuitry 255' detects a touch event based on electrical signals received from the touch sensor 207 (via the input-output means 254) in response to occurrence of the touch event; again, the touch event might be a user's finger having contacted the outward-facing surface 2091 of the display window 209. After determining the occurrence of the touch event, the touch sensing circuitry 255' outputs a signal to the processor 252 via the input-output means 254, the signal being indicative of the occurrence of the touch event. The processor 252 then accesses instructions contained in the memory 253 and generates one or more control signals for communicating to one or more of the lighting control electronics section 2051, the heating control electronics section 2053 and other control electronics sections of the aerosol-generating device 2. In this manner, the occurrence of a touch event on the display screen 209 is able to result in one or more control inputs to control one or more of the lighting assembly 206 (or lighting system 6), the inductor coil 208 and other features of the aerosol-generating device 2. Although not shown in Figure 20, the touch sensing circuitry 255' may include a sampling capacitor, with the touch sensing circuitry outputting the signal indicative of a touch event by charging a sampling capacitor to a voltage indicative of the touch event.

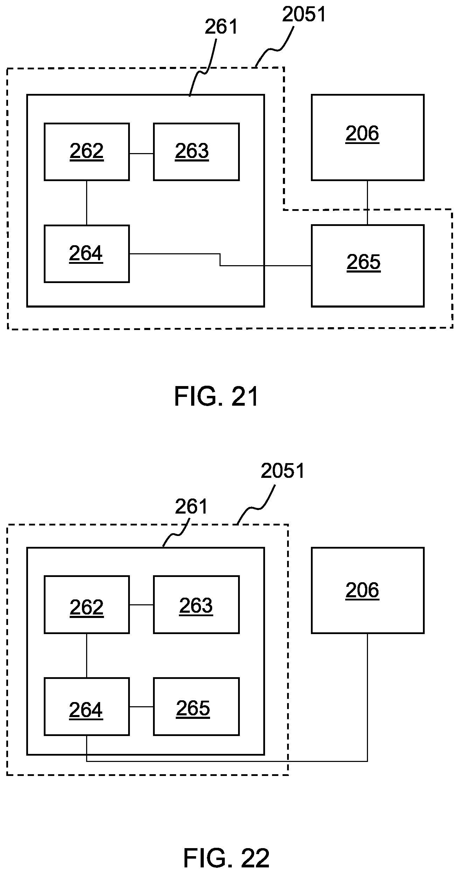

Figure 21 is a schematic representation of an exemplary embodiment of the lighting control electronics section 2051 for controlling operation of the lighting assembly 206 of the aerosol-generating device 2 illustrated in the above figures. The lighting control electronics section 2051 is shown in broken outline in Figure 21. The lighting control electronics section 2051 has a microcontroller 261 containing a processor 262, memory 263 and input-output means 264. The lighting control electronics section 2051 also has an LED driver 265. The LED driver 265 is separate to the microcontroller 261 but communicably coupled thereto via the input-output means 264. The LED driver 265 is also communicably coupled to the LEDS 2061 of the lighting assembly 206 so as to control the LEDs. As previously discussed, the lighting control electronics section 2051 may be communicably coupled to the touch sensing control electronics section 2052, so that the LED driver 265 may control the LEDs 2061 of the lighting assembly 206 in response to a touch event being detected by the touch sensing control electronics section 2052.

Figure 22 is a schematic representation of an alternative exemplary embodiment of the lighting control electronics section 2051 for controlling operation of the lighting assembly 206 of the aerosol-generating device 2. This embodiment differs from the embodiment of Figure 21 in that the LED driver 265 is integrated into the microcontroller 261, rather than being separate therefrom. The LED driver 265 controls the LEDs 2061 of the lighting assembly 206 via the input-output means 264. The LED driver 265 may control the LEDs 2061 of the lighting assembly 206 in response to a touch event being detected by the touch sensing control electronics section 2052.

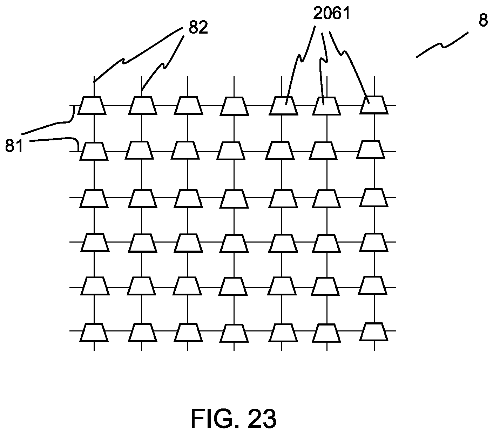

Figure 23 is a schematic representation illustrating how the LEDs 2061 of the lighting assembly 206 may be coupled to an arrangement 8 of intersecting row pins 81 and column pins 82. As can be seen, a single LED 2061 is coupled to the intersection of each rod pin 81 and column pin 82. When used in combination with the lighting control electronics sections 2051 of Figures 16 or 17, the LED driver 265 operates to illuminate each one of the plurality of LEDs 2061 by activating the row pin 81 and the column pin 82 to which the respective LED is connected. The LED driver 265 may operate to activate a single one of the LEDs 2061 or any combination of multiple ones of the LEDs.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number "A" is understood as "A" ± 10% of "A". Within this context, a number "A" may be considered to include numerical values that are within general standard error for the measurement of the property that the number "A" modifies. The number "A", in some instances as used in the appended claims, may deviate by the percentages enumerated above provided that the amount by which "A" deviates does not materially affect the basic and novel characteristic(s) of the claimed invention. Also, all ranges include the maximum and minimum points disclosed and include any intermediate ranges therein, which may or may not be specifically enumerated herein. The terms "in which" and "wherein" are used synonymously through this specification.

## Claims

1. A light guide assembly (711) for a lighting system of an aerosol-generating system, the light guide assembly (711) comprising:
a support structure (714), and
an opaque coating or film (713); the support structure (714) comprising a light transmissive body (719), the light transmissive body (719) configured to channel light there through towards a surface of the light transmissive body (719), the opaque coating or film (713) overlying the surface of the light transmissive body (719), the opaque coating or film (713) comprising a plurality of apertures (712) for transmission there through of light channelled through the light transmissive body (719);
wherein the support structure (714) further comprises an opaque body (717), the light transmissive body (719) comprising a first set of one or more light transmissive portions (718) and a second set of one or more light transmissive portions (720), wherein the opaque body (717) and the light transmissive portions (718, 720) are configured to interconnect with each other such that the opaque body (717) separates the first set of one or more light transmissive portions (718) from the second set of one or more light transmissive portions (720), the second set of one or more light transmissive portions (720) arranged to partially or wholly surround the first set of one or more light transmissive portions (718).

2. A light guide assembly (711) according to claim 1, wherein the plurality of apertures (712) are arranged in a plurality of aperture areas (7151a-g, 7161), each one of the plurality of aperture areas (7151a-g, 7161) comprising one or more of the plurality of apertures (712).

3. A light guide assembly (711) according to claim 2, wherein each one of the plurality of aperture areas (7151a-g, 7161) is spatially separated from the other aperture areas of the plurality of aperture areas (7151a-g, 7161).

4. A light guide assembly (711) according to either one of claim 2 or claim 3, wherein the apertures (712) of at least one of the plurality of aperture areas (7151a-g) are arranged such that the respective aperture area extends over a length between opposed first and second ends (7152, 7153), the aperture area reducing in lateral width towards the opposed first and second ends (7152, 7153).

5. A light guide assembly (711) according to any one of claims 1 to 4, wherein the plurality of apertures (712) comprise a first set of one or more apertures (715) and a second set of one or more apertures (716), the second set of one or more apertures (716) arranged to partially or wholly surround the first set of one or more apertures (715).

6. A light guide assembly (711) according to any one of claims 1 to 5, wherein the first set of one or more light transmissive portions (718) are arranged to collectively define a number eight.

7. A light guide assembly (711) according to any one of claims 1 to 6, further comprising a first opaque coating or film overlying the first set of one or more light transmissive portions (718) and a second opaque coating or film overlying the second set of one or more light transmissive portions (720), the first opaque coating or film comprising a first set of one or more apertures (715) and the second opaque coating or film comprising a second set of one or more apertures (716).

8. A light guide assembly (711) according to claim 7, wherein one or both of the first and second sets of one or more apertures (715, 716) comprise a plurality of apertures arranged in a plurality of aperture areas (7151a-g, 7161), each one of the plurality of aperture areas comprising one or more of the plurality of apertures.

9. A light guide assembly (711) according to claim 8, comprising one or more non-light transmissive areas disposed between the aperture areas of the first set of aperture areas (715).

10. A lighting system (6) for an aerosol-generating system, the lighting system (6) comprising:
a plurality of light emitting elements (61);
a first set (611) of a plurality of lighting areas (611a-g), wherein each one of the lighting areas (611a-g) is spatially separated from the other lighting areas, wherein each one of the lighting areas (611a-g) comprises one or more of the plurality of light emitting elements (61);
a light guide assembly (711) according to any one of claims 1 to 9, the light guide assembly (711) arranged over the plurality of light emitting elements (61);
control electronics (2051) coupled to the plurality of light emitting elements (61) and configured to selectively activate each one of the plurality of lighting areas (611a-g).

11. A lighting system (6,) according to claim 10, comprising one or more non-light emitting areas disposed between the lighting areas of the first set of lighting areas (611a-g).

12. A lighting system (6) according to either one of claim 10 or claim 11, wherein no light emitting areas are disposed between adjacent lighting areas of the first set of lighting areas (611a-g).

13. A lighting system (6) according to any one of claims 10 to 12, wherein when all of the plurality of light emitting elements (61) are illuminated, the numeral eight ("8") is displayed.

14. A lighting system (6) according to any one of claims 10 to 13, wherein the plurality of apertures (712) of the light guide assembly (711) are arranged in a plurality of aperture areas (7151a-g, 7161), each one of the plurality of aperture areas (7151a-g, 7161) comprising one or more of the plurality of apertures (712), wherein each one of the plurality of lighting areas (611a-g) is in light transmissive relationship with a different one of the plurality of aperture areas (7151a-g, 7161) such that light from each one of the plurality of lighting areas (611a-g) is visible through the apertures of a corresponding aperture area (7151a-g, 7161).

15. A method of fabricating a light guide assembly (711), the method comprising:
providing a support structure (714), the support structure (714) comprising a light transmissive body (719) and an opaque body (717), the light transmissive body (719) configured to channel light there through towards a surface of the light transmissive body (719), wherein the light transmissive body (719) comprises a first set of one or more light transmissive portions (718) and a second set of one or more light transmissive portions (720);
interconnecting the opaque body (717) and the light transmissive portions (718, 720) with each other such that the opaque body (717) separates the first set of one or more light transmissive portions (718) from the second set of one or more light transmissive portions (720) and the second set of one or more light transmissive portions (720) partially or wholly surround the first set of one or more light transmissive portions (718);
applying a coating or film (713) of opaque material to the surface of the light transmissive body (719);
selectively removing portions of the opaque material from the coating or film (713) to define a plurality of apertures (712) through the coating or film (713) for transmission there through of light channelled through the light transmissive body (719).

## Patentansprüche

1. Lichtleiterbaugruppe (711) für ein Beleuchtungssystem eines Aerosolerzeugungssystems, wobei die Lichtleiterbaugruppe (711) Folgendes umfasst:
eine Stützstruktur (714), und
eine undurchsichtige Beschichtung oder Folie (713);
wobei die Stützstruktur (714) einen lichtdurchlässigen Körper (719) umfasst, wobei der lichtdurchlässige Körper (719) dafür ausgelegt ist, Licht durch ihn hindurch in Richtung einer Oberfläche des lichtdurchlässigen Körpers (719) zu leiten, wobei die undurchsichtige Beschichtung oder Folie (713) über der Oberfläche des lichtdurchlässigen Körpers (719) liegt, wobei die undurchsichtige Beschichtung oder Folie (713) eine Vielzahl von Öffnungen (712) umfasst, durch die hindurch das durch den lichtdurchlässigen Körper (719) geleitete Licht übertragen wird;
wobei die Stützstruktur (714) ferner einen undurchsichtigen Körper (717) umfasst, wobei der lichtdurchlässige Körper (719) einen ersten Satz von einem oder mehreren lichtdurchlässigen Abschnitten (718) und einen zweiten Satz von einem oder mehreren lichtdurchlässigen Abschnitten (720) umfasst, wobei der undurchsichtige Körper (717) und die lichtdurchlässigen Abschnitte (718, 720) dafür ausgelegt sind, so miteinander verbunden zu werden, dass der undurchsichtige Körper (717) den ersten Satz von einem oder mehreren lichtdurchlässigen Abschnitten (718) von dem zweiten Satz von einem oder mehreren lichtdurchlässigen Abschnitten (720) trennt, wobei der zweite Satz von einem oder mehreren lichtdurchlässigen Abschnitten (720) so angeordnet ist, dass er den ersten Satz von einem oder mehreren lichtdurchlässigen Abschnitten (718) teilweise oder vollständig umgibt.

2. Lichtleiterbaugruppe (711) nach Anspruch 1, wobei die Vielzahl von Öffnungen (712) in einer Vielzahl von Öffnungsbereichen (7151a-g, 7161) angeordnet sind, wobei jeder der Vielzahl von Öffnungsbereichen (7151a-g, 7161) eine oder mehrere der Vielzahl von Öffnungen (712) umfasst.

3. Lichtleiterbaugruppe (711) nach Anspruch 2, wobei jeder der Vielzahl von Öffnungsbereichen (7151a-g, 7161) räumlich von den anderen Öffnungsbereichen der Vielzahl von Öffnungsbereichen (7151a-g, 7161) getrennt ist.

4. Lichtleiterbaugruppe (711) nach einem von Anspruch 2 oder Anspruch 3, wobei die Öffnungen (712) von wenigstens einem der Vielzahl von Öffnungsbereichen (7151a-g) so angeordnet sind, dass sich der jeweilige Öffnungsbereich über eine Länge zwischen einem ersten und einem zweiten Ende (7152, 7153), die sich gegenüberliegen, erstreckt, wobei sich die seitliche Breite des Öffnungsbereichs in Richtung des ersten und des zweiten Endes (7152, 7153), die sich gegenüberliegen, reduziert.

5. Lichtleiterbaugruppe (711) nach einem der Ansprüche 1 bis 4, wobei die Vielzahl von Öffnungen (712) einen ersten Satz von einer oder mehreren Öffnungen (715) und einen zweiten Satz von einer oder mehreren Öffnungen (716) umfassen, wobei der zweite Satz von einer oder mehreren Öffnungen (716) so angeordnet ist, dass er den ersten Satz von einer oder mehreren Öffnungen (715) teilweise oder vollständig umgibt.

6. Lichtleiterbaugruppe (711) nach einem der Ansprüche 1 bis 5, wobei der erste Satz von einem oder mehreren lichtdurchlässigen Abschnitten (718) so angeordnet ist, dass diese zusammen die Ziffer Acht definieren.

7. Lichtleiterbaugruppe (711) nach einem der Ansprüche 1 bis 6, die ferner eine erste undurchsichtige Beschichtung oder Folie, die über dem ersten Satz von einem oder mehreren lichtdurchlässigen Abschnitten (718) liegt, und eine zweite undurchsichtige Beschichtung oder Folie, die über dem zweiten Satz von einem oder mehreren lichtdurchlässigen Abschnitten (720) liegt, umfasst, wobei die erste undurchsichtige Beschichtung oder Folie einen ersten Satz von einer oder mehreren Öffnungen (715) umfasst und die zweite undurchsichtige Beschichtung oder Folie einen zweiten Satz von einer oder mehreren Öffnungen (716) umfasst.

8. Lichtleiterbaugruppe (711) nach Anspruch 7, wobei einer oder beide von dem ersten und dem zweiten Satz von einer oder mehreren Öffnungen (715, 716) eine Vielzahl von Öffnungen umfassen, die in einer Vielzahl von Öffnungsbereichen (7151a-g, 7161) angeordnet sind, wobei jeder einzelne der Vielzahl von Öffnungsbereichen eine oder mehrere der Vielzahl von Öffnungen umfasst.

9. Lichtleiterbaugruppe (711) nach Anspruch 8, die einen oder mehrere nicht lichtdurchlässige Bereiche umfasst, die zwischen den Öffnungsbereichen des ersten Satzes von Öffnungsbereichen (715) angeordnet sind.

10. Beleuchtungssystem (6) für ein Aerosolerzeugungssystem, wobei das Beleuchtungssystem (6) Folgendes umfasst:
eine Vielzahl von lichtemittierenden Elementen (61);
einen ersten Satz (611) von einer Vielzahl von Beleuchtungsbereichen (611a-g), wobei jeder der Beleuchtungsbereiche (611a-g) räumlich von den anderen Beleuchtungsbereichen getrennt ist, wobei jeder der Beleuchtungsbereiche (611a-g) eines oder mehrere der Vielzahl von lichtemittierenden Elementen (61) umfasst;
eine Lichtleiterbaugruppe (711) nach einem der Ansprüche 1 bis 9, wobei die Lichtleiterbaugruppe (711) über der Vielzahl von lichtemittierenden Elementen (61) angeordnet ist;
Steuerelektronik (2051), die mit der Vielzahl von lichtemittierenden Elementen (61) gekoppelt und zum selektiven Aktivieren jedes einzelnen der Vielzahl von Beleuchtungsbereichen (611a-g) ausgelegt ist.

11. Beleuchtungssystem (6) nach Anspruch 10, das einen oder mehrere nicht lichtemittierende Bereiche umfasst, die zwischen den Beleuchtungsbereichen des ersten Satzes von Beleuchtungsbereichen (611a-g) angeordnet sind.

12. Beleuchtungssystem (6) nach einem von Anspruch 10 oder Anspruch 11, wobei zwischen angrenzenden Beleuchtungsbereichen des ersten Satzes von Beleuchtungsbereichen (611a-g) keine lichtemittierenden Bereiche angeordnet sind.

13. Beleuchtungssystem (6) nach einem der Ansprüche 10 bis 12, wobei, wenn alle der Vielzahl von lichtemittierenden Elementen (61) leuchten, die Ziffer Acht ("8") angezeigt wird.

14. Beleuchtungssystem (6) nach einem der Ansprüche 10 bis 13, wobei die Vielzahl von Öffnungen (712) der Lichtleiterbaugruppe (711) in einer Vielzahl von Öffnungsbereichen (7151a-g, 7161) angeordnet sind, wobei jeder der Vielzahl von Öffnungsbereichen (7151a-g, 7161) eine oder mehrere der Vielzahl von Öffnungen (712) umfasst, wobei jeder einzelne der Vielzahl von Beleuchtungsbereichen (611a-g) in einer lichtdurchlässigen Beziehung mit einem anderen der Vielzahl von Öffnungsbereichen (7151a-g, 7161) steht, sodass Licht aus jedem einzelnen der Vielzahl von Beleuchtungsbereichen (611a-g) durch die Öffnungen eines entsprechenden Öffnungsbereichs (7151a-g, 7161) hindurch sichtbar ist.

15. Verfahren zum Herstellen einer Lichtleiterbaugruppe (711), wobei das Verfahren Folgendes umfasst:
Vorsehen einer Stützstruktur (714), wobei die Stützstruktur (714) einen lichtdurchlässigen Körper (719) und einen undurchsichtigen Körper (717) umfasst, wobei der lichtdurchlässige Körper (719) dafür ausgelegt ist, Licht durch ihn hindurch in Richtung einer Oberfläche des lichtdurchlässigen Körpers (719) zu leiten, wobei der lichtdurchlässige Körper (719) einen ersten Satz von einem oder mehreren lichtdurchlässigen Abschnitten (718) und einen zweiten Satz von einem oder mehreren lichtdurchlässigen Abschnitten (720) umfasst;
Verbinden des undurchsichtigen Körpers (717) und der lichtdurchlässigen Abschnitte (718, 720) miteinander, sodass der undurchsichtige Körper (717) den ersten Satz von einem oder mehreren lichtdurchlässigen Abschnitten (718) von dem zweiten Satz von einem oder mehreren lichtdurchlässigen Abschnitten (720) trennt und der zweite Satz von einem oder mehreren lichtdurchlässigen Abschnitten (720) den ersten Satz von einem oder mehreren lichtdurchlässigen Abschnitten (718) teilweise oder vollständig umgibt;
Aufbringen einer Beschichtung oder Folie (713) aus undurchsichtigem Material auf die Oberfläche des lichtdurchlässigen Körpers (719);
selektives Entfernen von Abschnitten des undurchsichtigen Materials von der Beschichtung oder Folie (713), um eine Vielzahl von Öffnungen (712) durch die Beschichtung oder Folie (713) zu definieren, durch die hindurch das durch den lichtdurchlässigen Körper (719) geleitete Licht übertragen wird.

## Revendications

1. Ensemble guide de lumière (711) pour un système d'éclairage d'un système de génération d'aérosol, l'ensemble guide de lumière (711) comprenant :
une structure de support (714), et
un revêtement ou film opaque (713) ;
la structure de support (714) comprenant un corps de transmission de lumière (719), le corps de transmission de lumière (719) étant configuré pour canaliser la lumière à travers celui-ci vers une surface du corps de transmission de lumière (719), le revêtement ou film opaque (713) recouvrant la surface du corps de transmission de lumière (719), le revêtement ou film opaque (713) comprenant une pluralité d'orifices (712) pour la transmission à travers celui-ci de la lumière canalisée à travers le corps de transmission (719) ;
dans lequel la structure de support (714) comprend en outre un corps opaque (717), le corps de transmission de lumière (719) comprenant un premier ensemble d'une ou plusieurs portions de transmission de lumière (718) et un deuxième ensemble d'une ou plusieurs portions de transmission de lumière (720), dans lequel le corps opaque (717) et les portions de transmission de lumière (718, 720) sont configurées pour s'interconnecter les unes avec les autres de telle sorte que le corps opaque (717) sépare le premier ensemble d'une ou plusieurs portions de transmission de lumière (718) du deuxième ensemble d'une ou plusieurs portions de transmission de lumière (720), le deuxième ensemble d'une ou plusieurs portions de transmission de lumière (720) étant agencé pour entourer partiellement ou totalement le premier ensemble d'une ou plusieurs portions de transmission de lumière (718).

2. Ensemble guide de lumière (711) selon la revendication 1, dans lequel la pluralité d'orifices (712) sont agencés dans une pluralité de zones d'orifices (7151a-g, 7161), chacune de la pluralité de zones d'orifices (7151a-g, 7161) comprenant un ou plusieurs de la pluralité d'orifices (712).

3. Ensemble guide de lumière (711) selon la revendication 2, dans lequel chacune de la pluralité de zones d'orifice (7151a-g, 7161) est spatialement séparée des autres zones d'orifice de la pluralité de zones d'orifice (7151a-g, 7161).

4. Ensemble guide de lumière (711) selon l'une ou l'autre de la revendication 2 ou de la revendication 3, dans lequel les orifices (712) d'au moins l'une parmi la pluralité de zones d'orifices (7151a-g) sont agencés de telle sorte que la zone d'orifices respective s'étende sur une longueur entre des première et deuxième extrémités opposées (7152, 7153), la zone d'orifices dont la largeur transversale diminue vers les première et deuxième extrémités (7152, 7153) opposées.

5. Ensemble guide de lumière (711) selon l'une quelconque des revendications 1 à 4, dans lequel la pluralité d'orifices (712) comprend un premier ensemble d'un ou plusieurs orifices (715) et un deuxième ensemble d'un ou plusieurs orifices (716), le deuxième ensemble d'un ou plusieurs orifices (716) étant agencé pour entourer partiellement ou totalement le premier ensemble d'un ou plusieurs orifices (715).

6. Ensemble guide de lumière (711) selon l'une quelconque des revendications 1 à 5, dans lequel le premier ensemble d'une ou plusieurs portions de transmission de lumière (718) sont agencées pour définir collectivement un chiffre huit.

7. Ensemble guide de lumière (711) selon l'une quelconque des revendications 1 à 6, comprenant en outre un premier revêtement ou film opaque recouvrant le premier ensemble d'une ou plusieurs portions de transmission de lumière (718) et un deuxième revêtement ou film opaque recouvrant le deuxième ensemble d'une ou plusieurs portions de transmission de lumière (720), le premier revêtement ou film opaque comprenant un premier ensemble d'un ou plusieurs orifices (715) et le deuxième revêtement ou film opaque comprenant un deuxième ensemble d'un ou plusieurs orifices (716).

8. Ensemble guide de lumière (711) selon la revendication 7, dans lequel l'un ou les deux parmi les premier et deuxième ensembles d'un ou plusieurs orifices (715, 716) comprennent une pluralité d'orifices agencés dans une pluralité de zones d'orifices (7151a-g, 7161), chacune de la pluralité de zones d'orifices comprenant une ou plusieurs de la pluralité d'orifices.

9. Ensemble guide de lumière (711) selon la revendication 8, comprenant une ou plusieurs zones ne transmettant pas la lumière disposées entre les zones d'orifice du premier ensemble de zones d'orifice (715).

10. Système d'éclairage (6) pour un système de génération d'aérosol, le système d'éclairage (6) comprenant :
une pluralité d'éléments électroluminescents (61) ;
un premier ensemble (611) d'une pluralité de zones d'éclairage (611a-g), dans lequel chacune des zones d'éclairage (611a-g) est spatialement séparée des autres zones d'éclairage, dans lequel chacune des zones d'éclairage (611a-g) comprend un ou plusieurs parmi la pluralité d'éléments électroluminescents (61) ;
un ensemble guide de lumière (711) selon l'une quelconque des revendications 1 à 9, l'ensemble guide de lumière (711) étant agencé sur la pluralité d'éléments électroluminescents (61) ;
une électronique de commande (2051) couplée à la pluralité d'éléments électroluminescents (61) et configurée pour activer sélectivement chacune de la pluralité de zones d'éclairage (611a-g).

11. Système d'éclairage (6) selon la revendication 10, comprenant une ou plusieurs zones non électroluminescentes disposées entre les zones d'éclairage du premier ensemble de zones d'éclairage (611a-g).

12. Système d'éclairage (6) selon l'une ou l'autre de la revendication 10 ou de la revendication 11, dans lequel aucune zone électroluminescente n'est disposée entre des zones d'éclairage adjacentes du premier ensemble de zones d'éclairage (611a-g).

13. Système d'éclairage (6) selon l'une quelconque des revendications 10 à 12, dans lequel lorsque la totalité de la pluralité d'éléments électroluminescents (61) sont éclairés, le chiffre huit (« 8 ») est affiché.

14. Système d'éclairage (6) selon l'une quelconque des revendications 10 à 13, dans lequel la pluralité d'orifices (712) de l'ensemble guide de lumière (711) sont agencés dans une pluralité de zones d'orifices (7151a-g, 7161), chacune de la pluralité de zones d'orifices (7151a-g, 7161) comprenant un ou plusieurs de la pluralité d'orifices (712), dans lequel chacune de la pluralité de zones d'éclairage (611a-g) est dans une relation de transmission de lumière avec une zone différente de la pluralité de zones d'orifices (7151a-g, 7161) de telle sorte que la lumière provenant de chacune de la pluralité de zones d'éclairage (611a-g) est visible à travers les orifices d'une zone d'orifices (7151a-g, 7161) correspondante.

15. Procédé de fabrication d'un ensemble guide de lumière (711), le procédé comprenant :
la fourniture d'une structure de support (714), la structure de support (714) comprenant un corps de transmission de lumière (719) et un corps opaque (717), le corps de transmission de lumière (719) étant configuré pour canaliser la lumière à travers celui-ci vers une surface du corps de transmission de lumière (719), dans lequel le corps de transmission de lumière (719) comprend un premier ensemble d'une ou plusieurs portions de transmission de lumière (718) et un deuxième ensemble d'une ou plusieurs portions de transmission de lumière (720) ;
l'interconnexion du corps opaque (717) et des portions de transmission de lumière (718, 720) les unes avec les autres de telle sorte que le corps opaque (717) sépare le premier ensemble d'une ou plusieurs portions de transmission de lumière (718) du deuxième ensemble d'une ou plusieurs portions de transmission de lumière (720) et le deuxième ensemble d'une ou plusieurs portions de transmission de lumière (720) entourent partiellement ou totalement le premier ensemble d'une ou plusieurs portions de transmission de lumière (718) ;
l'application d'un revêtement ou d'un film (713) de matériau opaque à la surface du corps de transmission de lumière (719) ;
le retrait sélectif de portions du matériau opaque du revêtement ou du film (713) pour définir une pluralité d'orifices (712) à travers le revêtement ou le film (713) pour la transmission à travers celui-ci de la lumière canalisée à travers le corps de transmission de lumière (719).
